# EUROPEAN PATENT SPECIFICATION

(11) **EP 3 542 036 B1**
(45) Date of publication and mention of the grant of the patent: **04.11.2020**
(21) Application number: 16837984.0
(22) Date of filing: 17.11.2016
(51) Int. Cl.: F01N 3/028, F01N 3/20

(54) **DEVICE FOR ABATEMENT OF LIQUID, GASEOUS AND/OR SOLID POLLUTANT SUBSTANCES OF VARIOUS KIND, CONTAINED INTO THE EXHAUST SMOKES, AND PROCESS FOR TREATMENT AND ABATEMENT OF SUCH POLLUTANT SUBSTANCES**
VORRICHTUNG ZUR BESEITIGUNG VON FLÜSSIGEN, GASFÖRMIGEN UND/ODER FESTEN SCHADSTOFFEN VERSCHIEDENER ART IN RAUCHGASEN UND VERFAHREN ZUR BEHANDLUNG UND BESEITIGUNG DERARTIGER SCHADSTOFFE
DISPOSITIF DE RÉDUCTION DE SUBSTANCES POLLUANTES LIQUIDES, GAZEUSES ET/OU SOLIDES DE DIVERS TYPES, CONTENUES DANS LES FUMÉES D'ÉCHAPPEMENT, ET PROCÉDÉ DE TRAITEMENT ET DE RÉDUCTION DE TELLES SUBSTANCES POLLUANTES

(43) Date of publication of application: 25.09.2019
(73) Proprietor: Eprotech S.R.L., 31053 Pieve di Soligo (TV) (IT)
(72) Inventor: SONEGO Alessandro, 33077 Sacile (PN) (IT); VARIOLA Diego, 31015 Conegliano (TV) (IT)
(74) Representative: Dalla Rosa, Adriano
(86) International application number: PCT/IT2016/000270
(87) International publication number: WO 2018/092160

(56) References cited:
- WO-A1-2004/070175
- WO-A2-03/096383
- CN-A- 105 916 570
- DE-C1- 19 526 628
- JP-A- H10 280 948

## Description

The invention relates to a device for the treatment of liquid, gaseous and/or solid pollutant substances of various kind, contained into the exhaust smokes, which is so structured as to resolve pollutant complex molecules into not pollutant elementary molecules and substances before the smokes be discharged in the environment, in such a way that to reduce considerably the environment impact.

The invention also relates to a process for the treatment and abatement of such pollutant substances, for obtaining the above mentioned effect.

As it is known, the emission of pollutant substances, produced by various sources, provides for a change of environmental conditions, and first of all of the air quality, which in the long run cause or may cause harmful effects to the health. Generally, the atmospheric pollution is caused by combustion processes of substances of various kind, above all during the operation of civil or industrial thermic plants, and the traffic of vehicles powered by explosion engines. Many studies and searches have been effected for treatment of the combustion smokes, in order to reduce or possibly eliminate the emission of pollutant substances in the atmosphere, and this at the present time is obtained with various processes and systems.

The solutions which are currently employed in a wide extent for abatement of the pollutant substances of the combustion smokes are the following.
- Pre-depuration: the main systems employed are the deposition chambers or cyclones and multi-cyclones, in which the treatment of the contained air is obtained by the partial abatement of the pollutant substances contained into the exhaust smokes by means of the gravity force or the inertia force of the particles of the substances contained into the same smokes.

The drawbacks deriving from the use of these systems for abatement of smokes consist in that:
- they serve for removing the powdered substances or the rough materials only, therefore the efficiency of such abatement systems depends on the type of pollutant substance being treated ;
- the operation of these systems require necessarily the presence of other depuration systems connected to the abatement system employed from time to time ;
- textile filtration : abatement system which is realized by letting the air flow to pass through some filters constituted by textile fiber of various kind ;

The drawbacks deriving from the use of these systems for abatement of smokes consist in that:
- they aren't suitable for each type of powdered substances (no adhesive powders or liquids) ;
- they may be used for the treatment of smokes with low temperatures only (about max. 140° C), and which cannot be used on to powders, gases and combustible steams.
- Electrostatic precipitation : process which utilizes a high voltage electric field for loading the solid or liquid particles of the pollutant substances being deposited by electrostatic attraction on to the electrode, from which they are then removed ;

The drawbacks deriving from the use of these systems for abatement of smokes consist in that:
- to require necessarily periodical checking for the maintenance for possible mechanical or electrical problems ;
- not suitable for being utilized for powders of the pollutant substances with low resistivity ;
- to require low operation temperatures (max. 270°C) ;
- to be much expensive.
- Wet abatement: this kind of process, also called washing process, foresees the removal of the pollutant substances into a gaseous flow by means of the action of a liquid, normally the water.

The drawbacks deriving from the use of these systems for abatement of smokes consist in that:
- the particulate must have low concentrations ;
- a production of muds and waste liquids is determined, which can be disposed of with difficulty.

There are also existing further systems and processes specialized for abatement of more pollutant factors, consisting in :
- Plasma torches : they consist of systems for abatement of smokes which utilize the very high temperature (up to over 6000° C) reached by some materials, usually gas like argon and air, when they found themselves at the plasma state, for reducing the residual particles of smokes at the elementary state ;

The drawbacks deriving from the use of these systems for abatement of smokes consist in that:
- to be little used owing to the very high costs of the plants and the operation thereof ;
- they provide for the production of NO x and a strong volatility of the pollutant elements into the smokes ;
- to be able to be used for the plants having reduced overall dimensions only ;
- to require a continuous maintenance, which cannot be sustained owing to the quick consumption of the electrodes (after about 400 hours of continuous work).
- Catalytic ceramic post-heaters : these systems for abatement of smokes use the thermal oxidation at high temperature for transforming the component parts of the pollutant substances, by exploiting the presence of a catalyst.

The drawbacks deriving from the use of these systems for abatement of smokes consist in :
- the high cost of the catalyst;
- the impossibility to work at high temperatures ;
- not optimal efficiencies, relative to the physical and mechanical wearing of the catalyst;
- they are not suitable for abatement of all the types of pollutant composed substances.
- Catalytic conversion : such a process consists to the fact to promote, by means of a proper sponge of catalytic material, the conversion of the unburnt hydrocarbons, the nitrogen oxides, and the carbon monoxide into the carbon dioxide, water and nitrogen ; such an abatement system is utilized into the catalytic mufflers for reducing as much as possible the quantity of the above mentioned substances into the exhaust gases.

The drawbacks deriving from these systems for abatement of smokes consist in that:
- they are rather ineffective during the first minutes of operation of the car (the system operates correctly when a temperature between 300 ° C and 900 ° C is reached) ;
- they are scarcely effective during the acceleration and deceleration steps (the air/fuel ratio is variable too fast) ;
- the catalyst may deteriorate itself in the course of time because of the presence in the exhaust gases of small quantities of sulphur and lead ;
- the 80-90% of the pollutant substances are at the utmost eliminated.
- Condensation : in this process for abatement of smokes the steams of the pollutant substances are removed by changing their physical state from gaseous to liquid, with a pressure increase and/or a temperature reduction.

The drawbacks deriving from these systems for abatement of smokes consist in that:
- to be limited to processes of organic nature ;
- the most part of the applications requires additional abatement systems ;
- the more stressed parts of these systems may be subjected to erosion or incrustation ;
- they are needed periodical normal maintenance and cleaning operations.
- Biological filtration : this process for abatement of smokes exploits the biological oxidation, in that the polluted air is lets to pass through a means into which some micro-organisms are present, which are suitable for decomposing the pollutant substances, by utilizing these latter as nourishing source for such micro-organisms.

The drawbacks deriving from the use of these systems for abatement of smokes consist in that:
- to require specific and accurate designs for being utilized in an optimal way ;
- a complex management of the biological filters ;
- the possibility to utilize such systems solely with air flows with low concentration of pollutant substances ;
- they aren't suitable for being utilized with smoke flows into which toxic substances for the micro-organisms are present;
- to require a frequent monitoring for keeping a satisfying efficiency.

From what it has been specified, it is to point out that the currently used systems for abatement of smokes involve a series of functional drawbacks, consisting in that:
- to require high costs per the operation and the maintenance or the renewal of the plants, which do not allow a spreading on a large extent thereof ;
- to require high costs for some of the plant component parts ;
- not to be suitable for the abatement of all the types of pollutant substances ;
- to be suitable to operate with limited utilization temperatures only ;
- to produce, in some cases, other pollutant substances.

Document WO 2004/070175 A1 discloses a device for abatement of liquid, gaseous and/or solid pollutant substances of various kind, the combustion of pollutant substances happening into at least a combustion chamber communicating with the inlet of at least one flue, the smokes reduced of an elevate percentage of pollutant substances of the same smokes, treated by microwaves, exit from the outlet of the flue. The microwave energy creates a plasma whereby chemical reactions are promoted, which reactions serve to reduce the pollutant emission.

The object of the present invention concerns a device with special constructive characteristics for treating the pollutant substances by microwaves, which is different and new with respect to the device disclosed by the document WO 2004/070175 A1.

The object of the present invention is to realize an innovative device for abatement of liquid, gaseous and/or solid pollutant substances contained into the exhaust smokes, which may be spread on a large extent, with limited expenses, and which allows to obtain a considerable energetic saving and allows the sure abatement of a high percentage of the pollutant substances of smokes, on the complete spectrum of the same pollutant substances.

The object of the invention is also to make available a process for the treatment of abatement of such pollutant substances, for obtaining the above described purposes.

The invention will be better understood by the following description, given by way of a not limiting example only, of the constructive and functional characteristics of the device referred to, and of the steps of the above described process for the treatment of abatement, with particular reference to the attached drawings, in which :
Figure 1 shows a schematic perspective front view of the device for abatement of smokes in accordance to the present invention, in a first possible embodiment thereof ;
Figure 2 shows a perspective front view cutaway in the longitudinal direction of the device of the Figure 1 ;
Figure 3 shows a perspective front view of a component part of the device of the Figure 1 ;
Figure 4 shows a perspective front view of a portion of the component part of the Fig. 3 ;
Figure 5 shows a longitudinally cutaway view of the component part of the Fig. 3, with its internal component parts ;
Figure 6 shows a schematic front view of the device for abatement of smokes of the Fig. 1, in a second possible embodiment thereof, in which such a device is installed in a position different with respect to the device of the Fig. 1 ;
Figure 7 shows a schematic perspective front view of the device for abatement of smokes in accordance to the present invention, in a third embodiment thereof ;
Figure 8 shows a perspective front view cutaway in a longitudinal direction of the device of the Fig. 7 ;
Figure 9 shows a perspective front view of a component part of the device of the Fig. 7, which is separated with respect to the other component parts of this device ;
Figure 10 shows a perspective front view cutaway in the longitudinal direction of the component part of the Fig. 9 ;
Figure 11 shows a schematic perspective front view of the device for abatement of smokes of the Fig. 10, in a fourth possible embodiment thereof, in which such a device is installed in a position different with respect to the device of the Fig. 7 ;
Figures 12 a and 12 b show schematically the interaction among dipoles of molecules of materials, respectively in absence of an external electromagnetic field, and in presence of an external electromagnetic field, generated by microwaves, for obtaining the heating of materials for the effect of the microwaves in accordance to a first physical principle ;
Figures 13 a and 13 b show schematically an atom of material respectively in absence of an external electromagnetic field, and in presence of an external electromagnetic field, like that generated by the microwaves, for obtaining the heating of the material referred to for the effect of the microwaves, according to a second physical principle ;
Figure 14 shows the diagram temperature/heating time in presence of the microwaves of some of the materials which may be used in the device according to the invention ;
Figure 15 shows a longitudinally cutaway and enlarged view of the component part of the Fig. 5, with its internal component parts, with the path of a microwave passing through said internal component parts, and the physical effects which are determined along the entire path of such a microwave.

The invention relates to a device for abatement of liquid, gaseous and/or solid pollutant substances of various kind, which are contained into the exhaust smokes deriving from the combustion processes of pollutant substances, produced by various sources, and in particular but not exclusively in the case of use of civil or industrial thermic plants, and the traffic of vehicles powered by explosion engines. This abatement device will be described in detail in the following Figures, together with the process for the treatment and abatement of the pollutant substances, and to the different steps of this process. This device is suitable for resolving the most part of the pollutant complex molecules into elementary and not pollutant molecules and substances before the smokes be discharged into the environment, in a way that they may be discharged in the environment without determining the pollution thereof. The physical process with which the resolving of the pollutant substances into single not pollutant component substances is obtained is the thermal dissociation, in which the breaking of a complex molecule into more simple molecules, or of a compound into other or quite into its constituting parts is obtained by heating at high temperatures (usually greater than 1600 ° ° C) of the exhaust smokes containing the pollutant substances of various kind.

Such a dissociation, which occurs by absorbing heat, is represented like a homogeneous or heterogeneous chemical reaction, the balance of which is changed in the sense to active the decomposition when the temperature increases. The temperature to which such a process occurs depends on the compound or the molecule referred to, but usually it is too high.

Examples of forming and consequently decomposition of some molecules of pollutant gases :
- NOx : nitrogen oxides, where "x" is utilized for identifying in a generic way all the nitrogen oxides, therefore it indicates the different number which can be present of atoms of nitrogen and oxygen bonded to each other. The nitrogen oxides which have been checked during a combustion are mainly the nitrogen monoxide (NO) and the nitrogen dioxide (NO2).

During the combustion, the nitrogen N2 and the oxygen O2 react to each other at high temperature, by forming the nitrogen monoxide which, in turn, by oxidizing itself forms the nitrogen dioxide in accordance to the following relations :

N2 + O2 ↔ 2NO

2NO+ O2 ↔ 2NO2

At the high temperatures, usually over 1600 °C, the molecules of nitrogen(N2) and oxygen (O2) dissociate themselves into their atomic states. In order to achieve a good decomposition, therefore, the temperatures and the times must be checked, in a manner that an excessive production of NO during the heating and an excessive production of NO2 during the cooling be avoided.

In fact, the quantities of NO depend on :
- combustion temperature : the higher the combustion temperature and the greater the production of NO ;
- persistence time at such temperatures of the combustion gases : the greater the persistence time the higher the production of NO ;
- quantity of free oxygen contained in the flame : the more limited the excess of the combustion air, the lower the production of NO with respect to the production of CO.

On the contrary, the production of NO2 increases with the temperature decrease, therefore during cooling of smokes. Such a production is proportional to the concentration of O2 and to the square of the concentration of NO. The slower the cooling, the greater the production of NO2. Since the solutions employed for the abatement of the pollutant substances have been already considered, it is therefore now proposed a schema summarizing the solutions currently used specifically for reducing the emissions of NOx, and which are distinguished in :
1. PRIMARY TECHNICS (used for reducing the NOx during the combustion)
   - Flame cooling : the water or steam are injected into the combustion chamber, which use the thermic energy for evaporating or overheating, with the result to lower the flame temperature and consequently to reduce the production of NOx.
   - Combustion at steps : a combustion is obtained (the temperature of which is lower than the flame adiabatic temperature) by letting some steam generating tubes to pass in the interior of the combustion chamber, which tubes absorb some heat from the reaction (heat extraction step), by lowering the temperature (1027 ° C).

   After such a step, a reheating is realized in which, by adding the remaining part of combustible, another combustion is started for reaching again the stoichiometric conditions.
2. SECONDARY TECHNICS (used for reducing the NOx before the smokes are coming out from the plant) : they consist mainly in the injection into the flow of burnt gases of ammonia, urea or other compounds suitable for reacting with the NOx, for promoting the reducing effects.
   - Selective not catalytic reduction : process based upon the selective reduction, by the ammonia and the urea, of the nitrogen oxides in absence of catalysts and therefore it occurs at high temperatures (from 850 ° C to 1100 ° C).
   - Selective catalytic reduction : process based upon the selective reduction, by the ammonia or the urea, of the nitrogen oxides in presence of a catalyst. The reduction of the NOx occurs on to the surface of the catalyst at a temperature comprised from 320 °C and 400 ° C.
   - SO2 : the generation of SO 2 is strictly correlated to the content of sulphur in the combustible being used. The production of SO 2 is formed by the combustion of the sulphur with air in accordance to the following process :

      S + O2 → SO2

   It decomposes itself, over the 2000° C, in S and SO3, SO and O :

   SO2 → SO + O

   2SO2 → SO3 + SO

   3SO2 → 2SO3 + S

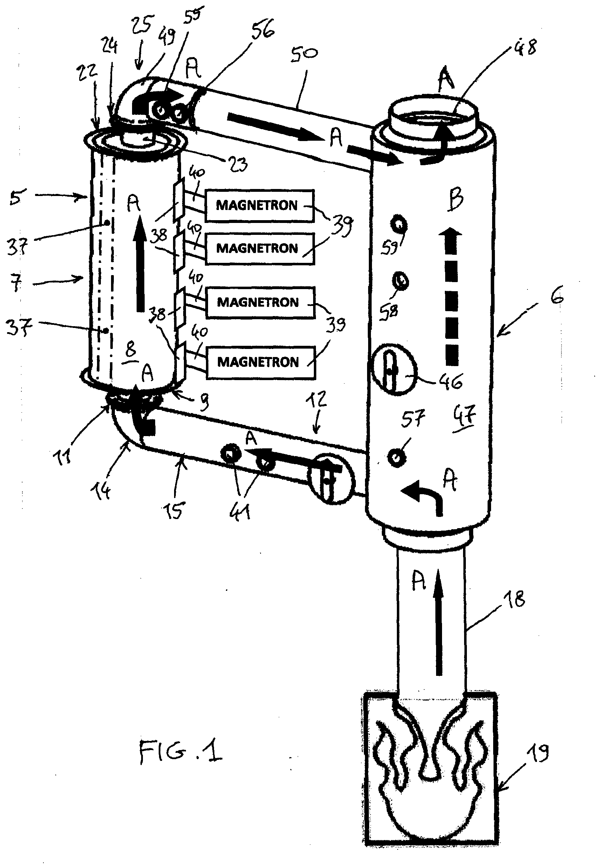

   By referring to the Figs. 1-5, it is now described the device for abatement of the liquid, gaseous and/or solid pollutant substances of various kind contained into the exhaust smokes, in a first embodiment thereof. Such a device is constituted substantially by the following main component parts :
   - heating module 5, through which the exhaust smokes containing the pollutant substances to be abated are let to pass, and in the interior of which there are installed the component elements which will be described, so shaped as for producing internal temperatures of the module 5 which are typically from about 1200 ° C up to about 2200 ° C, and which determine the heating of smokes at these temperatures, in order to dissociate at the most wide extent and in the manner and with the physical phenomena which will be described the molecules of the different compounds constituting such pollutant substances , in order to let coming out from the module the smokes containing a high percentage of single not pollutant component substances, which could so be discharged afterwards in the environment;
   - flue 6 arranged downstream the heating module 5 in the smokes circulation direction A, and connected to this latter as it will be described, which is provided for conveying and discharging in the outer environment the smokes coming out from the heating module, such a flue containing internally some component elements which are made and perform the functions which will be described. Turning now to the Figs. 1-4, in which the structural configuration of the heating module 5 is shown, it is noted that it is substantially constituted by a lengthened container 7 comprising an outer envelope 8 preferably of cylindrical shape, but which may be shaped also with other geometrical shapes, which is made of a not magnetic metallic material, withstanding the high temperatures and impermeable at the microwaves and delimiting an inner chamber, multi-modal or with dimensions greater than the electromagnetic wave spreading inside thereof (not indicated in the Figures), which chamber is suitable for containing the component parts which will be described. As metallic material it may be utilized advantageously but not exclusively the stainless steel AISI 304. The metallic outer envelope 8 is closed at its lower end portion by a flat closing disc 9 preferably of circular shape, which is also made of mechanically withstanding metallic material and impermeable at the microwaves, which may be of the same type of material of the outer envelope 8, said disc 9 being joined sealingly with a short vertical cylindrical sleeve 10 directed downward, also of metallic material having the same characteristics of the preceding metallic materials, which is bored axially and internally for its entire length for communicating with said inner chamber.

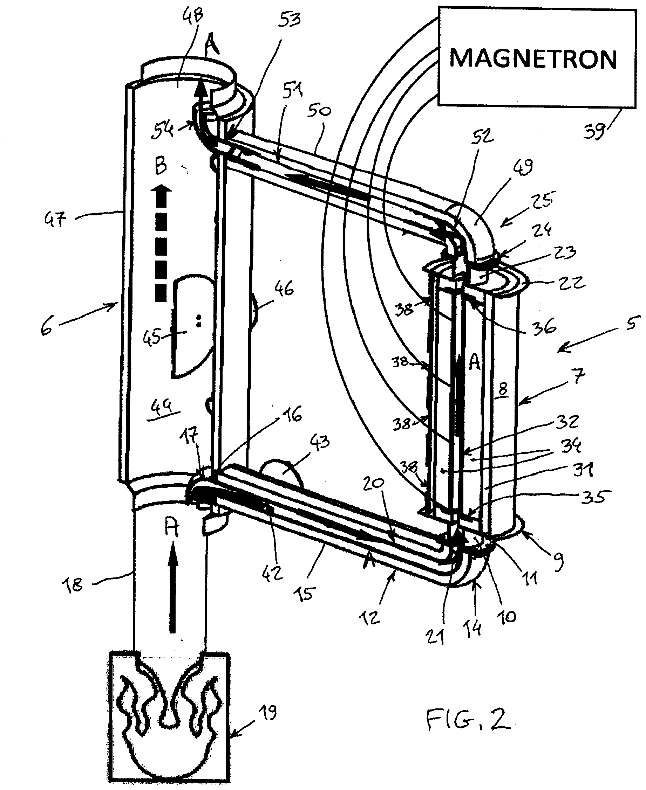

The vertical sleeve 10 is welded at its lower end portion with a flat joining flange 11, in the example shaped of circular form and made of mechanically withstanding metallic material, suitable for withstanding the high temperatures of the contact with the gases deriving from the combustion and stable at the high temperatures. In turn, the joining flange 11 is screwed on or fixed sealingly to the correspondent end portion of a circulation tubular conduit 12, and is provided with a central through hole 13 coinciding with the hole (not indicated) of the sleeve 10. Such a conduit 12 is shaped with a curved elbow 14 directed upward in the fixing zone of the joining flange 11 and is extended with a portion of horizontal conduit 15 directed toward the flue 6 and passing through a through hole 16 of the lower zone of the flue 6 (see Fig. 2), by joining itself with its other end portion with a curved elbow 17 directed downward, and housed into a vertical conduit 18 joined with the combustion chamber 19 in which the products emitting pollutant smokes are burnt. In the interior of the tubular conduit 12 it is housed in a stationary manner a further tubular conduit 20, having a diameter smaller than that of the preceding conduit 12 and shaped in the same way and with the same length thereof.

One of the end portions of such a further conduit 20 is joined sealingly by means of a curved elbow 21 directed upward with the joining flange 11 and the sleeve 10, in a manner that the inner cavity of the further conduit 20 coincides with the hole of the sleeve 10.

Between the tubular conduits 12 and 20 it is arranged an insulating material, such as for example the mineral wool.

The metallic outer envelope 8 is closed at its opposite end portion, from which the smokes are coming out (in this case, the upper end portion), in the same way of the lower end portion namely with a flat closing disc 22 preferably of circular shape, which is joined sealingly with a short vertical cylindrical sleeve 23 directed upward, which is welded at its upper end portion with a flat joining flange 24, in the example of circular shape, which is secured sealingly with the inlet end portion of an outlet tube 25 shaped as it will be described and the outlet end portion of which is joined to the internal upper part of the flue 6.

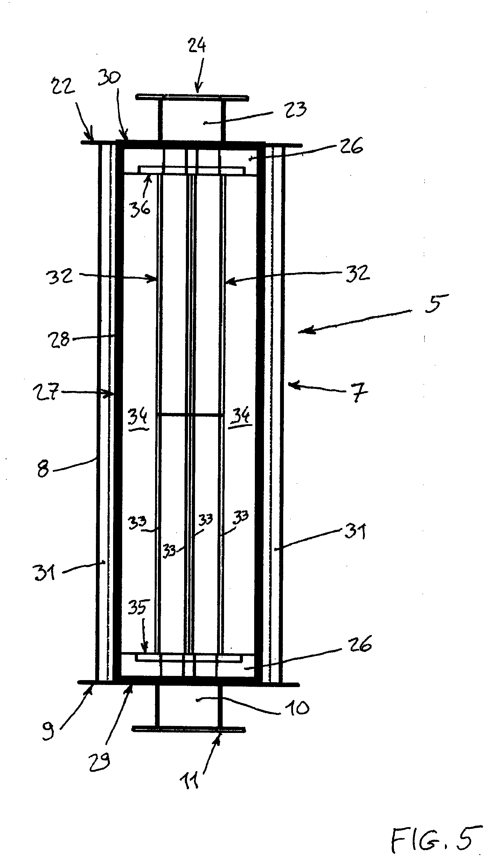

Also in this case, the upper closing disc 22 and the vertical sleeve 23 are made with the same material and shaped in the same manner of the correspondent elements of the lower end portion of the outer envelope 8. By referring now to the Figs. 2 and 5, in which it is shown the inner chamber 26 (multi-modal or having dimensions greater than the electromagnetic wave spread therein) of the outer envelope 8 of the heating module 5, it is noted that the same is delimited by a lengthened internal cylindrical container 27 made of mechanically withstanding metallic material and impermeable to the microwaves, which may be constituted for example by stainless steel AISI 304 or other suitable material with these characteristics, such an internal container being shaped with a vertical peripheral wall 28 having the same length and smaller diameter with respect to the outer envelope 8, which peripheral wall is joined at its end portions by a lower disc 29 and an upper disc 30, and these elements are housed in a way that between the outer envelope 8 and the internal container 27 a free space be defined, into which an insulating material 31 be inserted, which covers all the internal peripheral surface of the outer envelope 8 and all the external peripheral surface of the lengthened container 27. Such an insulating material 31 may be constituted for example of mineral wool or other suitable thermic insulating material withstanding the high temperatures.

In the central zone of the lengthened internal container 27 there are housed and secured one or more lengthened vertical rectilinear tubes 32, through the inner cavity of which the smokes containing the pollutant substances are let to circulate, and such tubes are made with the material and for performing the function which will be described later on.

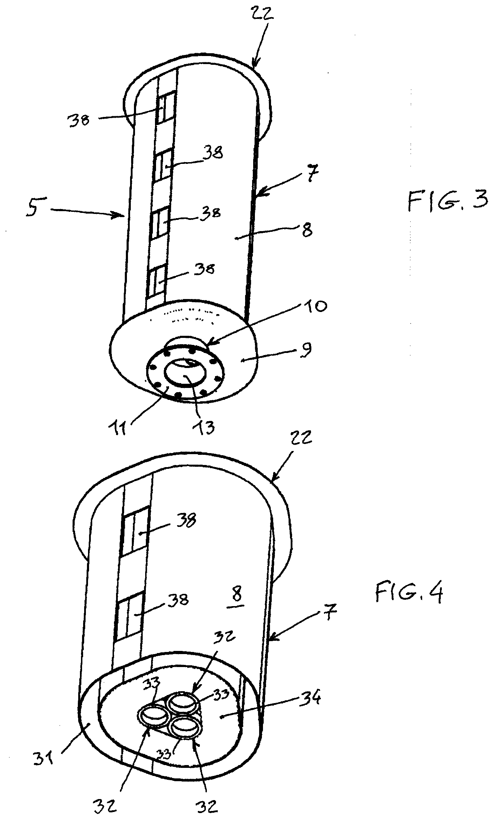

In the example referred to, there are provided three lengthened tubes 32 which, as visible from the Fig. 4, are at physical contact with the outer surface of their walls 33, for allowing a thermic transmission among all the tubes. In the space comprised among the vertical tubes 32 and the outer surfaces of the walls 33 of all the tubes 32 it is inserted an internal insulating material 34 for the entire height of the same tubes, which material fully covers all the outer surfaces of the walls 33 of the same tubes, and the surfaces of the lower and upper end portions of such an internal insulating material 34 are covered by a respective plug 35 and 36 of the same insulating material, which is secured on to the same surfaces, and is bored for permitting the passage of smokes in the interior and is joined sealingly at the lower side with the underlying sleeve 10 and at the upper side with the overlying sleeve 23, and said vertical tubes 32 are extended from the plug 35 to the plug 36.

Such an internal insulating material 34 is a not-organic material or of any other type, suitable to withstand temperatures comprised between - 50° C and 3000 ° C, with characteristics of radio-transparency to the frequencies comprised between 0,2 GHz and 5 GHz, therefore to the microwaves frequencies, to have a high mechanical strength, a capacity to be machined and to withstand the contact with the smokes deriving from the combustion reaction and submitted to processes of thermal, physical and chemical type as well as to pyrolysis phenomena, in the interior of the hollow tubes 32.

An example of insulating material which may be utilized is constituted by a product made with polycrystalline fibers having a high content of alumina, which is mixed with the not-organic binders and withstands 1600 ° C. For measuring the temperature of the internal chamber 26 of the heating module 5 there are provided preferably two optical pyrometers (not indicated), fixed in the interior of such a chamber 26 in two positions offset to each other in the vertical direction and entering the chamber through correspondent through holes 37, provided in positions coincident to each other through the outer envelope 8, the vertical peripheral wall 28, and the insulating materials 31 and 34, of which the relative optical part is visible from outside, and which are electrically connected to a control central station (not shown) connected to the electric circuit of the present device, in order to detect steadily the internal temperature of the heating module 5. Such an heating module 5 is also provided with a plurality of through openings 38 provided through the outer envelope 8 and the vertical peripheral wall 28, in positions coinciding to each other, which through openings are aligned and adequately spaced away from each other in the vertical direction, and in the Figures such through openings 38 are for example in the number of 4, but of course they may be made also with different numbers thereof.

As visible from the Figs. 1 and 2, such through openings 38 are communicating with at least a relative microwave generator 39 (magnetron), through correspondent waveguides 40 connected sealingly between the microwave generator 39 and the through openings 38, in such a way that the microwaves generated by the generator 39 be distributed, directed and let to interfere with the material constituting the vertical tubes 32, for obtaining the effects which will be described hereinafter. The microwaves generated by the generator 39 may be transmitted to the vertical tubes 32 even in different manners with respect to what just specified, thus without departing from the protection sphere of the present invention.

The microwave generator 39 is of per se known type and is disposed externally the outer envelope 8 and enclosed by an outer casing (not indicated), together with all the component parts of the present device for abatement of the pollutant substances.

Such a microwave generator may be regulated in such a way as to generate microwaves with a power comprised preferably between 200 W and 20000 W.

There may be provided also more microwave generating sources, in a number multiple of one, each one having the same above described output.

Turning now to the Figs. 1 and 2 again, it is noted that in the circulation conduit 13 there are provided some through holes, in the example constituted by the two through holes 41, for the insertion and the fixing of per se known sensors (not indicated), which are calibrated for detecting the parameters relating to the circulating smokes, and in particular the flow rate, the temperature and the composition of smokes entering the flue 6 through the conduit 18 and passing through the circulation conduit 12. As flow rate sensor it may be utilized for example a measuring instrument for the differential pressure. As sensor for temperature and composition of smokes it may be utilized for example a per se known smoke analyzer of professional type. In this way, the detection of these parameters also allows to know the composition of the substances contained into the smokes regarding their single pollutant component parts. All the above described sensors are electrically connected to said control central station, together with the electric and electronic components of the magnetron 39 and the other electric components pertaining to the other component parts of the present device. In the interior of the circulation conduit 12, moreover, at least a valve element 42 is mounted (see Fig. 2), which is constituted for example by a per se known gate valve, which is connected to a regulating hand grip 43 secured externally the conduit 12, in a position comprised between the through holes 41 and the flue 6. Such a regulating hand grip 43 may be actuated, manually or automatically, for actuating the valve element 42 from a closing position to a semi-closed or an opened position of the path for circulating the smokes through the conduit 12, and vice versa, for the purpose to allow completely, partially or to prevent the circulation of smokes through the same conduit. In the internal chamber 44 of the flue 6 is also mounted at least an additional valve element 45 (see Fig. 2) in a higher position with respect to that of the preceding valve element 42, and also this additional valve element 45 is constituted for example by a per se known gate valve, which is also connected to a regulation hand grip 46 secured to the outer wall 47 of the flue 6. Such a regulation hand grip 46 can be actuated, like the previous one, for displacing the valve element 45 from a semi-opened or opened position to a closing position of the circulation path of smokes through said internal chamber 44, and, therefore, to allow completely, partially or to prevent the circulation of smokes through the entire same internal chamber. In this way, by acting on to either one or to both the above described gate valves, it is possible, for example, to perform the following operations :
- actuation in the opened position of the additional valve element 45 and in the closing position of the valve element 42 : in such a case, the smokes produced by the combustion into the combustion chamber 19 pass through the vertical conduit 18 and are forced to enter directly the internal chamber 44 of the flue 6, so that such smokes pass through such internal chamber 44 in the rising direction B, by coming out from the opened upper opening 48 of the flue 6 and by dispersing them in the external environment. Moreover, in this case the smokes cannot pass through the further conduit 20 which is closed by the valve element 42 and therefore they do not pass through the heating module 5 and aren't treated for the abatement, thereby determining a pollution of the external environment;
- actuation in the closing position of the additional valve element 45 and in the opened position of the valve element 42 : in such a case, the smokes do not pass through the internal chamber 44 of the flue 6, in that the valve element 45 is closed, but they are diverted through the conduit 20 and through the heating module 5, in that the valve element 42 is opened, and afterwards such smokes circulate through the cavities of the vertical tubes 32 in the rising direction A, in which such smokes are purified on a large extent from the pollutant substances as it will be described, and finally they are discharged outwards almost completely purified from the pollutant substances, by passing through the upper part and the opened upper opening 48 of the flue 6.

In turn, the outlet tube 25 is shaped like an elbow 49 bent orthogonally and joined to an end portion of a portion of horizontal tube 50, the other end portion of which is joined to the upper part of the outer wall 47 of the flue 6. In the interior of the outlet tube 25 a smoke discharging conduit 51 is housed, shaped at its one end portion with an elbow 52 in correspondence of the elbow 49 of the outlet tube 25, which is joined with the internal through cavity (not indicated) of such a vertical sleeve 23, and the other end portion of which passes through a correspondent through hole 53 provided through the outer wall 47 of the flue 6, in the upper part of this latter, and such an end portion is joined with a further short elbow 54 directed upward and housed into the internal chamber 44 of the same flue, for discharging in this manner externally, through the outlet opening 48, the smokes purified on a large extent from the pollutant substances. Between the conduit 51 and the tube 50 an insulation is arranged and is formed preferably by mineral wool. In the portion of horizontal tube 50, near the outlet of the heating module 5, there are provided at least two through holes 55 and 56 on a position aligned and approached to each other, through which a relative probe (not indicated) is introduced for detecting the flow rate, the temperature and the composition of smokes coming out from the heating module 5 toward the flue 6, such probes being electrically connected to the control central station connected to the electric circuit of the present device. Finally, in the flue 6 there are provided a lower through hole 57 and at least two upper through holes 58 and 59, for passing correspondent probes (not indicated), of which the lower probe is suitable to detect the flow rate of the smokes entering the internal chamber 44 of the flue 6, while the upper probes are suitable for detecting the flow rate, the temperature and the composition of smokes passing through said internal chamber 44, when the gate valve 45 of the flue 6 is opened, said probes being also electrically connected to such a control central station.

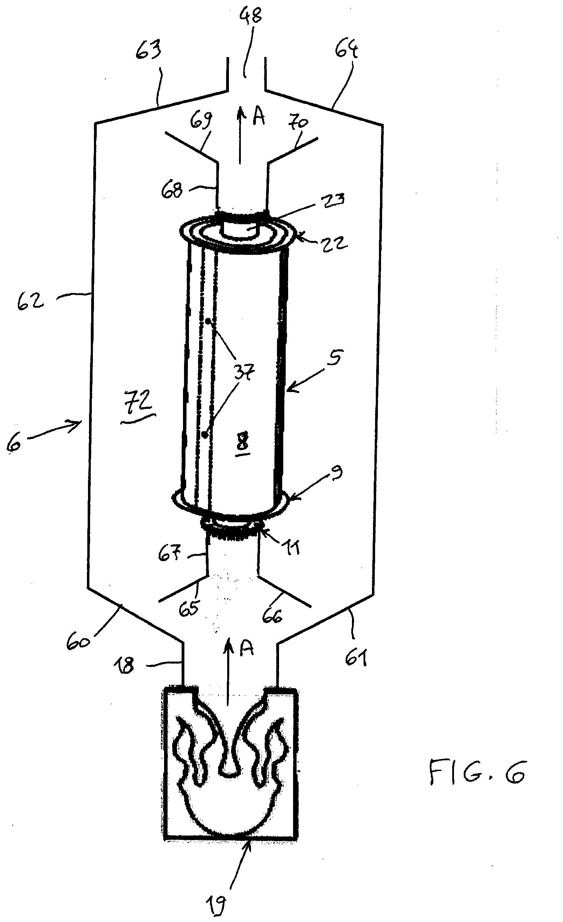

In the Fig. 6 it is now described a possible second embodiment of the device for the abatement of smokes according to the present invention, which is still constituted by the above described two component parts , namely : heating module 5 and flue 6 connected to each other. All the component parts identical to the preceding ones are marked with the same reference numerals. In this embodiment of the present device, in particular, it is noted that the heating module 5 is housed and adequately secured in the interior of the flue 6, which in this case is shaped larger and longer than the preceding one, and to this aim it is shaped with a closed and inclined circular lower wall, having inclinations 60 and 61 which are symmetrical to each other, the lower part of which is joined to the conduit 18 of the combustion chamber 19, and the upper part of which is joined to the cylindrical outer wall 62 of the flue 6, which is enlarged and lengthened in a manner to be able to house such heating module 5 of smokes. The upper part of the flue 6 is also shaped with an inclined circular upper wall, having inclinations 63 and 64 symmetrical to each other and opposite to those of the lower wall, and in the upper wall it is also provided the upper opening 48 of the flue 6, from which the smokes purified at a large extent from the pollutant substances are coming out. Besides, the smokes produced by the combustion of the products into the combustion chamber 19 circulate upward in the direction A, by passing through the conduit 18 and are conveyed in the interior of the heating module 5 through an inclined opened circular wall, having inclinations 65 and 66 symmetrical to each other, which wall is joined to the inlet of the heating module 5 through a portion of conduit 67 with cylindrical shape.

Also in this case, it is provided at least a magnetron (not indicated), which is secured preferably externally the outer wall 62 of the flue 6, and is still communicating through some wave guides (not indicated) to the vertical tubes (not indicated) arranged in the interior of the outer envelope of the heating module 5. In turn, the outlet of the heating module 5 is joined to a short cylindrical conduit 68 and an inclined circular upper wall, having inclinations 69 and 70 symmetrical to each other, which is communicating to the outlet opening 48 for discharging the smokes outside. The heating module 5 has a natural draught, therefore in this case it is obtained a self-regulating system. If the module 5 doesn't operate, the smokes pass without being treated both in the interior and outside the same module.

If the module 5 is operating, it will have a natural draught that will let to pass only the smokes that may be treated, without that any obstruction of the flue occurs. In this case, therefore, there aren't needed the valve elements provided in the previous embodiment of the present device.

It is necessary to point out that these embodiments of the present device don't provide the presence of a cooling module for the smokes at the outlet of the heating module 5, since these smokes coming out from the heating module are directly and quickly discharged into the external environment through the flue, and therefore as soon as they find themselves in the external environment they are quickly cooled down up to the room temperature, that is considerable lower than that of the same smokes, so that this quickly cooling down of the smokes prevents the pollutant substances of the smokes, that have been abated in to the heating module 5, from being combined again to each other in the external environment, and thereby may constitute again the same just abated pollutant substances.

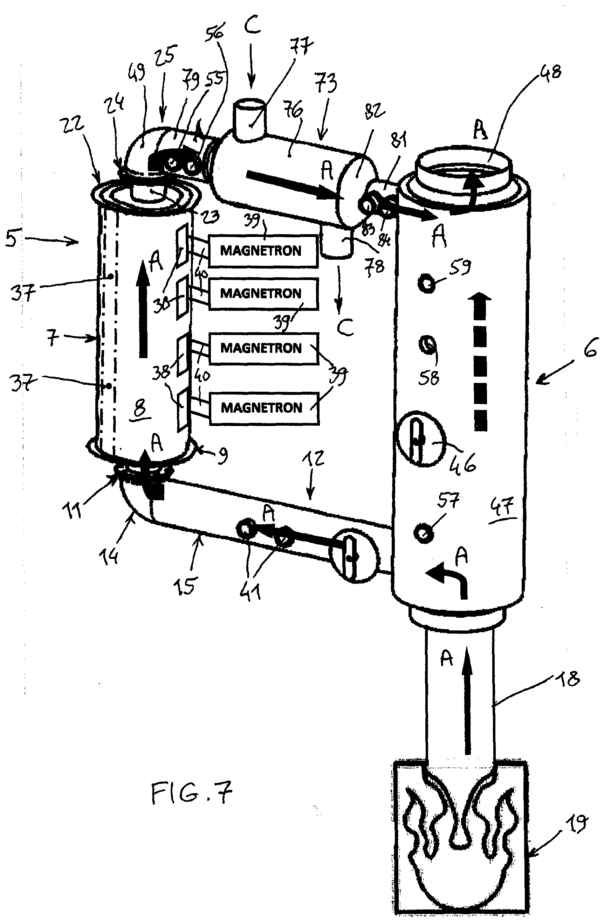

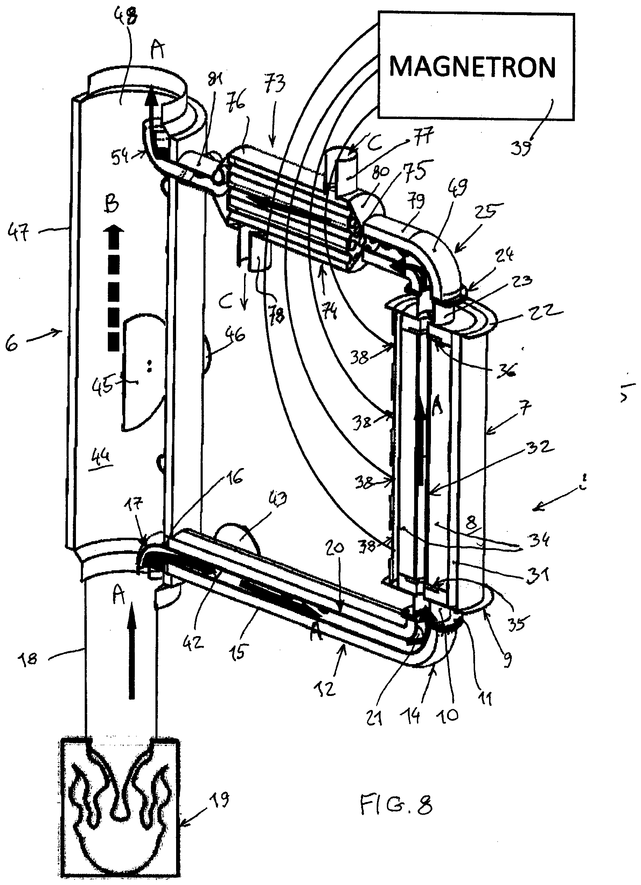

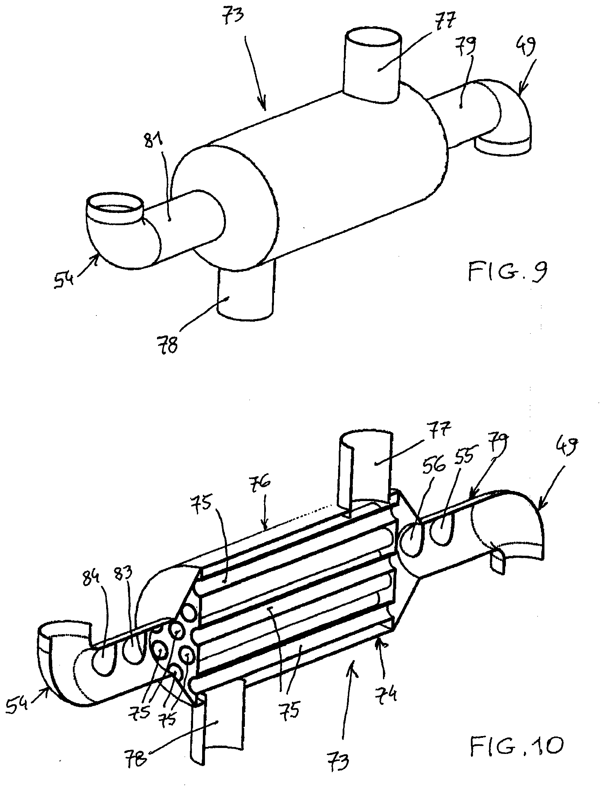

By referring to the Figures 7 and 8, it is now described a third embodiment of the device according to the invention, that in part is substantially identical to the device of the Figures 1 and 2, and differs therefrom in that it comprises also a cooling module 73 for smokes, formed by at least one heat exchanger, suitable for cooling down the smokes after their depuration at such temperatures as to prevent the recombination of the substances abated at the outlet of the same heat exchanger. Such a heat exchanger 73 is connected with its inlet and its outlet respectively to the outlet of the heating module 5 and to the flue 6, in to the upper part of the same flue. As it is visible from these Figures, as exchanger it may also be used any other means suitable to diminish the temperature of the depurated smokes and possibly also to realize any possible energy saving. The heat exchanger 73 (see also the Figures 9 and 10) is substantially constituted by a central body 74 extended in the horizontal direction, which is shaped preferably with a cylindrical shape and is equipped with a set of horizontal through tubes 75 separated to each other and provided through the central body 74 and in the longitudinal direction thereof, which are provided for the passage of the smokes to be cooled down, such tubes being extended from the end portion of the inlet to the end portion of the outlet of the heat exchanger 73. The central body 74 is completely covered by an external covering 76, thereby defining an internal chamber (not indicated) for allowing the circulation of the air for cooling the heat, produced by the smokes passing through the through tubes 75, which air is sucked in the direction C through a short opened and upright inlet pipe union 77, fixed to the upper part of the external covering 76 and directed upward, and, after being passed through the internal chamber and cooled down the central body 74, such an heated air is discharged outside through an opened and upright outlet pipe union 78, fixed to the lower part of the external covering 76.

As visible, furthermore, the inlet of the heat exchanger 73 is formed by the above mentioned inlet tube 25, that is still configured like an elbow 49 joined at a side to a portion of horizontal tube 79, the end portion of which is sealingly joined to the side wall 80 of the external covering 76, such an elbow being also shaped like previously for being joined to the outlet upper part of the heating module 5 in the above-described way. In turn, the outlet of the heat exchanger 73 is formed by a portion of horizontal tube 81, an end portion of which is sealingly joined to the other side wall 82 of the external envelope 76, and the other end portion of which enters the internal chamber of the flue 6 as previously described, for discharging therefore the cooled down smokes outward.

The material constituting the inlet tubes 25 of the smokes into the heat exchanger 73 and the outlet 81 of the smokes from the same exchanger are constituted preferably of metallic material having high mechanical strength, suitable to withstand the high temperatures and stable at the temperatures of the smokes in the inlet after the heating step of the same smokes. One example of such a material may be constituted by the stainless steel AISI 304.

Into the heat exchanger 73, the smokes are subjected to a quick cooling down, for arriving to the outlet of the heat exchanger with a temperature variable between about 50° C and 800° C, which fact allows to stabilize the abatement reactions of the smokes that happen into the heating module 5, and to prevent the recombination of the single abated substances after their cooling down. Into the horizontal tube portion 79, at the inlet of the heat exchanger 73, said two through holes 55 and 56 are provided for inserting some relative probes of the above-described type (not shown). In turn, into the horizontal tube portion 81, at the outlet of the heat exchanger 73, there are provided at least two through holes 83 and 84 in the aligned and close to each other position, through which it is introduced a relative probe (not shown), for detecting the flow rate, the temperature and the composition of the smokes coming out from the cooling module 73 toward the outlet 48 of the flue 6, such probes being also electrically connected to the above mentioned said central control station. Furthermore, as visible from the Figures 7 and 8, in the flue 6 there are still provided the above described three through holes 57, 58 and 59.

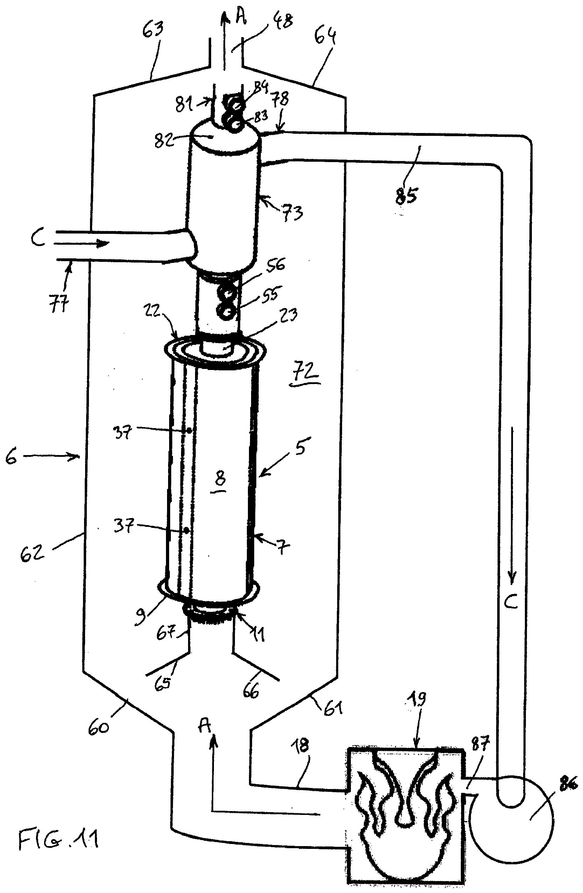

By referring to the Fig. 11, it is now described a fourth possible embodiment of the abatement device of the smokes according to the present invention, that is still constituted by the above described component parts in the Fig. 6, that is:
- heating module 5 ;
- cooling module 73 (heat exchanger) ;
- flue 6.

All the component parts identical the previous ones are marked with the same reference numerals. In this embodiment of the present device, in particular, it is noted that the heating module 5 and the cooling module 73 of the smokes are still joined to each other, and arranged aligned and slightly spaced away to each other in the vertical direction and are housed into and opportunely fixed in the interior of the flue 6, that also in this case is shaped larger and longer than the previous one. Such a flue 6 is also shaped with a closed and inclined lower circular wall, the lower part of which is joined to the conduit 18 of the combustion chamber 19 and the upper part of which is joined to the external circular part 62 of the flue 6, that is enlarged and lengthened in a way to be able to house said heating module 5 and cooling module 73 of the smokes. The upper part of the flue 6 is also shaped with an inclined circular upper wall and, in to the upper wall, also the upper opening 48 of the flue 6 is provided, from which the smokes purified at a large extent from the pollutant substances are coming out. Furthermore, also in this case, the smokes produced by the combustion of the products into the combustion chamber 19 circulate upward in the direction A, by passing through the conduit 18 and are conveyed in the interior of the heating module 5 by natural draught.

Also in this case, the cooling module 73 is connected with its inlet union pipe 77 to the outside, by letting such union pipe to pass through a correspondent hole (not indicated) of the external wall 62, and by connecting its outlet union pipe 78 to a conduit 85, passing through a correspondent hole (not shown) communicating with the external wall 62, joined with a pump 86, in turn joined with the combustion chamber 19 through a short conduit 87, all this in order to convey the warm air coming out from the heat exchanger 73 in the circulation direction C into the same combustion chamber, for increasing the comburent air into this chamber and thereby improving the combustion of the products.

It is to point out that the heat exchanger 73 constituting the cooling module of the smokes, after their purification into the heating module 5, may be made of various types, like an air to air exchanger, an air to water exchanger, and air to diathermic oil exchanger, but in the example referred to the exchanger is of the air to air type. As exchanger it may be also employed any other means suitable for lowering the temperature of the purified smokes and in case also for making possible energy savings. Also in this case, the smokes are let to pass through the modules 5 and 73 and the flue 6 by natural draught, as previously described.

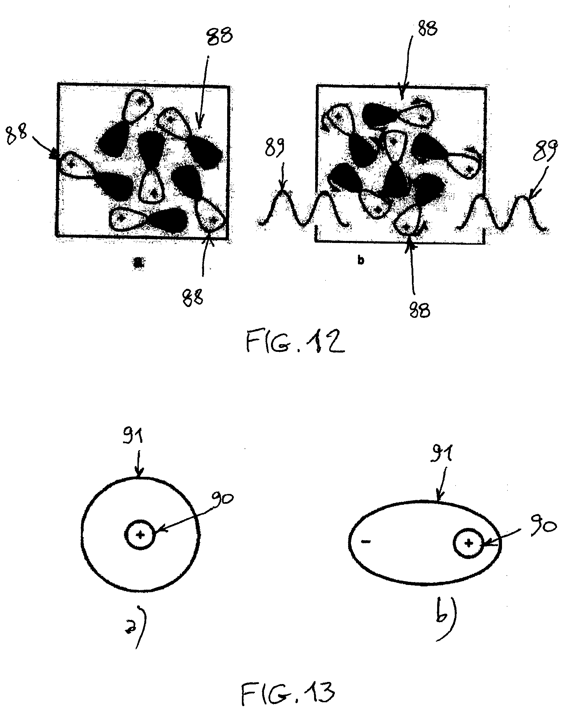

Now, there are described the grounds for obtaining the heating of the materials for effect of the microwaves, and this in order to explain how the pollutant smokes circulating through the present device are abated at a large extent in presence of the microwaves. A first ground is produced by the interaction among the dipoles contained into a material, wherein, as it is known, the dipoles are pairs of particles having opposite electric charges, namely positive and negative ones, which are contained into a material. In this case, the produced thermic effect is a consequence of the interaction dipole to dipole among the molecules of the material in presence of an electromagnetic field, like that generated by the microwaves. With particular reference to the Fig. 12, it is shown how this thermic effect caused by the interaction between dipoles is manifested. In particular, in the Fig. 12a there are schematically shown various dipoles 88 contained into a material. Such dipoles 88 are randomly oriented, no one orientation direction is privileged in absence of one alternate electric filed, such as for example the one produced by the microwaves acting on to the material referred to.

On the contrary, in the Fig. 12b it is noted that in presence of an alternate electric field, such as for example that one produced by the microwaves, acting on to the same material, the dipoles 88 change the orientation at each alternance of the alternate electric field. If the electric field is a high frequency field (for example, of 2,45 GHz), in presence of microwaves, such an alternate electric field 89 induces an agitation and an intermolecular friction (and therefore among the various dipoles 88), with consequent production of heating and therefore emission of infrared rays. A second ground of production of heating is produced by the physical phenomenon of the dielectric relaxation. In the Fig. 13a it is schematically noted the internal nucleus 90 of an atom of material (having positive charge) and the electrons rotating around the nucleus 90 (having negative charge), schematically represented as a "cloud" of electrons rotating around an orbit 91. In such a case, in absence of an alternate electric field, thus in a balanced condition, the electronic "cloud" is distributed along the orbit 91 equally around the nucleus 90. In presence of an alternate electric field, such as for example that one produced by the microwaves interacting with the same material, the electronic "cloud" rotating around the orbit 91 is deformed and is displaced (see Fig. 13b), for example as illustrated in this Figure, with consequent origin of a polarization that will reach the maximum deformation when the perturbation produced by the alternate electric field will reach the maximum level. When the intensity of such a perturbation is reduced, such an electronic "cloud" will tend to reach again its above described balanced condition, and under this circumstance the return to the balanced state of the same electronic "cloud" involves the release of heat and therefore the generation of infrared radiations.

The more the temperature to which the material is submitted is higher, the greater is the radius of the orbit 91 of the electronic "cloud" and, consequently, it is more simple to deform the same orbit. An additional ground of production of heating is determined by the Joule effect, in which into a semi-conductor material exposed to an electric field there are induced some displacements of the electric charges, with consequent releasing of heat for the Joule effect.

If now the device according to the present invention is considered, the microwaves generated by the magnetron 39 are directed against the surface of the lengthened tubes 32, housed into the heating module 5 and crossed by the smokes containing the pollutant substances and constituted by the so-called acceptor material, and the energy flow of such microwaves arriving on to the surface of such lengthened tubes 32 in the time unit and on to the surface unit of this acceptor material is reflected in part (reflecting capacity) in the direction opposite to the arriving direction of the microwaves, in part is absorbed by the acceptor material of said lengthened tubes 32 (absorbing capacity), and in part passes through the wall of the same acceptor material (semi-transparent capacity).

The absorbing capacity of the acceptor material of the lengthened tubes 32 depends on the physical characteristics of the incident radiation (and therefore of the microwaves) and on the nature of the same acceptor material.

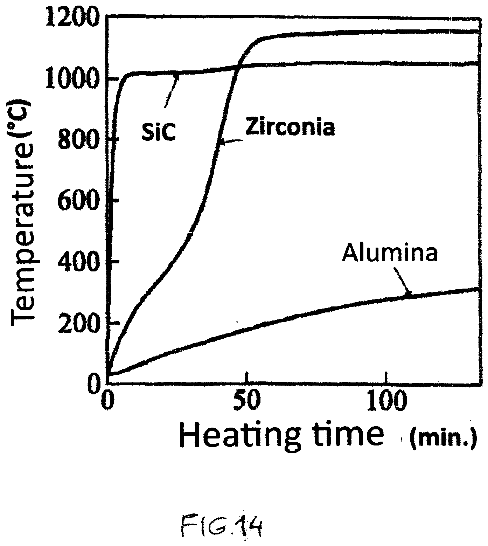

In the Fig. 14 it is shown a diagram of the temperature/time heating in presence of the microwaves of some materials that may be used as acceptor materials, namely materials keeping and absorbing the microwaves energy, for making the lengthened tubes 32 for circulating the smokes of the present device. As acceptor materials there have been selected the silicon carbide (SiC) and the zirconia, namely the zirconium oxide (ZrO2), that have been revealed to be good acceptor materials, and the characteristics of these materials are compared with those of a refractory material, like alumina (Al2O3). The diagram has been obtained at the following conditions: frequency f of the microwaves = 2,45 GHz ; mass density of the materials p : ZrO2 = 2520 Kg/m³, Al2O3 = 1588 Kg/m³ : SiC = 965 Kg/m³, thickness of the materials d : ZrO2 = 7,5 mm., Al2O3 = 12,5 mm., SiC = 10 mm..

From the diagram it is noted that the silicon carbide shows a rapid increase of the heating temperature in a short time and, when it reaches a determined temperature (about 1000° C), it keeps itself almost at the same temperature for a long heating time, whereas on the contrary the zirconia and the alumina don't show a rapid starting increase of the temperature and, anyway, after a certain heating time, the zirconia shows a rapid increase of the temperature, overcoming that one of the silicon carbide at the high temperatures, however such heating time is greater than that one of the silicon carbide. On the contrary, the alumina shows a reduced increase of temperature only, during the heating time, since this material has a low absorption of microwaves, being it a refractory material. From the comparison among the measured values, it has been observed how the silicon carbide must be considered the more suitable material for being used as acceptor material, for the greater capacity to absorb the microwaves and, therefore, for the faster increase of its temperature. Consequently, the lengthened tubes 32 of the present device are preferably made of this latter kind of material, however this doesn't exclude that also the zirconia might be used for the same aim. Such a silicon carbide, that is a ceramic material that behaves itself almost like a diamond, has also the following advantageous characteristics : low density, high hardness, high modulus of elasticity, high thermal conductivity, low linear expansion coefficient, maximum operating temperature in the inert gas of 1800° C, excellent strength to thermal shocks, corrosion and wear resistance also at the high temperatures, it is toxicologically safe, has good sliding properties and extreme resistance to acids and bases.

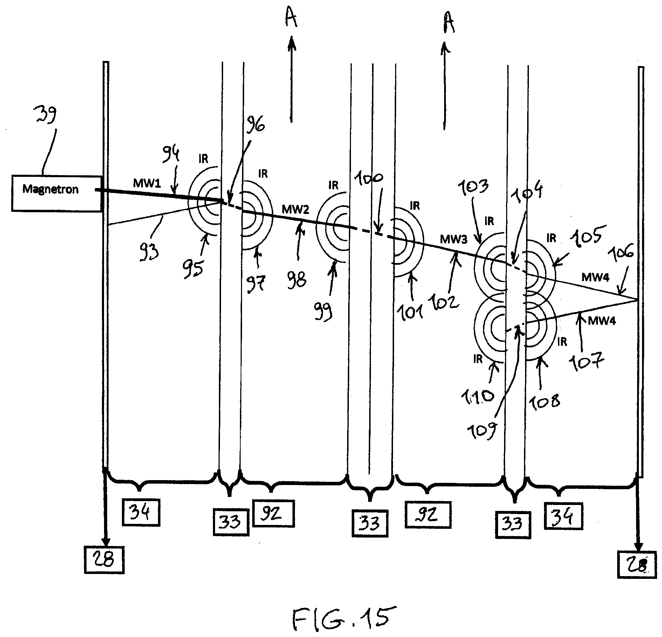

By referring now to the Fig. 15, it is shown a longitudinally cutaway and enlarged view of a part of the internal chamber 26 of the heating module 5, delimited by the vertical peripheral wall 28, with the internal component parts comprising the internal insulating material 34, and two lengthened tubes 32 with the peripheral wall 33, of which the walls 33 of the two tubes are into contact to each other, and wherein the internal cavity crossed by the smokes of each tube is marked with 92. In this view, it is also shown the internal path of a microwave generated by the magnetron 39 and passing in sequence through the internal insulating material 34, the peripheral wall 33 of the first tube 32, the internal cavity 92 of the first tube 32, the two peripheral walls 33 into contact to each other of the first and the second tube 32, the internal cavity 92 of the second tube 32, and the internal insulating material 34, which microwave is then reflected by the metallic material of the subsequent vertical peripheral wall 33, along a path 93 toward the vertical wall 28. This graph serves to explain the physical effects that are determined along the microwave path, and that involves a consistent abatement of the pollutant substances of the smokes circulating through the lengthened tubes 32. As visible from the left to the right side, the microwave passes at first directly through the internal insulating material 34 along a first path 94, then it comes into contact with the external surface of the peripheral wall 33 of the first tube 32, and in this position a first part of microwave is reflected by such wall 33 toward the insulating material 34. A second part of this microwave passes through the peripheral wall 33 of the first lengthened tube 32, along a path marked 96, and it is absorbed by the acceptor material (in the considered example, the silicon carbide) of the above-said tube by generating an infrared radiation 95 (therefore an heating) into the internal insulating material 34, that is inhibited by the same material, by isolating the heat of the external wall 33, and an infrared radiation 97 (therefore an heating) that is irradiated into the internal cavity 92 of the same tube. Under this circumstance, the warm smokes circulating through the internal cavity 92 of this tube and directed toward the trap, in the ascending direction A, are further heated by such a infrared radiation, by increasing their temperature. A third part of this microwave is transmitted by the acceptor material of the first lengthened tube 32, caused by its semi-transparent power, and exits from the internal surface of the peripheral wall 33of the tube 32, by passing directly through the internal cavity 92 of said tube, along a second path 98, by arriving in to contact with the internal surface of the other portion of peripheral wall 33 of the same tube, and in this position a first part of the microwave is reflected by such a wall 33 toward the previously wall, and by this latter is newly reflected toward the internal surface of the other portion of peripheral wall 33, thereby by determining multiple reflections of the microwave between these two internal walls. In turn, a second part of the microwave is, like previously, absorbed by the acceptor material of this tube, by generating an infrared radiation (therefore an heating) that is radiated in part through this portion of peripheral wall 33 and in part (marked with 99) into the internal cavity of the same tube. Also in this case, therefore, the circulating warm smokes are further heated by this additional infrared
radiation, by increasing further their temperature, whereas the microwave energy decreases.

By prosecuting to describe the path of the considered microwave, it is note that is passes both through the peripheral wall 33 of this first tube and through the peripheral wall 33 of the second tube, which walls are close to each other, and the path of the microwave through the two peripheral walls in contact to each other is marked with 100. Consequently, the passage of the microwave through the second tube determines the same above-described effects that are determined into the first tube 32, that is an infrared radiation that is radiated in part through the peripheral wall of the second tube 32, and in part (marked with 101) through the internal cavity 92 of the second tube 3, so the microwave passes directly through the internal cavity 92 of second tube, along the third path 102, and a first part of the microwave is reflected by the other part of wall 33 of the second tube toward the previously peripheral wall 33, with consequent multiple reflections of such a part of microwave between the internal walls of the second tube. Also in this case, so, a second part of the microwave is absorbed by the acceptor material of the tube, along the path 104, by generating an infrared radiation (marked with 103) that is radiated into the internal cavity 92 of said second tube. As consequence of this, an additional heating of warm smokes is determined also into the second tube 32 by the infrared radiation thereby generated. By prosecuting its progress on to the path 104 through the other portion of wall 33 of the second tube 32, as said, the microwave is absorbed by the acceptor material generating also an infrared radiation marked with 105 (therefore an heating), that is radiated toward the subsequent insulating material 34, where such a infrared radiation is inhibited by the same material, by isolating the heat to the external wall 33. Finally, a third d part of microwave is transmitted and prosecutes along the path 106, defined by the thickness of the insulating material 34, and is directed against the metallic material of the peripheral upright wall 28 of the internal container 27, where the microwave is reflected toward the portion of wall 3 of the second tube, along an additional path 107, by passing through the insulating material34. When the microwave is in contact with the portion of wall 33 of the second tube, t is newly absorbed by the acceptor material of the same wall, by generating also here an infrared radiation, that is radiated in part (marked with 108) toward the insulating material 34, where such a infrared radiation is inhibited by the same material, by isolating the heat to the external wall 33. Finally, the microwave pass through newly said portion of wall 33, along the path 109, being partially absorbed by it, by generating also here an infrared radiation, that is radiated in part (marked with 110) through the internal cavity 92 of the second tube 32, by producing thereby an additional heating of the smokes circulating through the internal cavity.in this manner, by passing as described through all the cited component parts of the internal chamber 26, the microwave gradually decreases of energy and determines, on one hand a considerable increase of temperature of the smokes circulating through the tubes 32 and on the other hand it determines, caused by the repeated reflections of the same microwave through the internal cavity 92 of the relative tubes and of its contact with the high temperatures, with the nonhomogeneties and the different densities of the gas contained into the circulating smokes, the peaks of energy of the microwaves (named hotspots) that are not distributed in an orderly and homogenous manner into these internal cavities, but are surprisingly distributed in an casual manner and in variable and different positions into the same internal cavities. As consequence of this, by dimensioning opportunely both the characteristics (power, intensity, frequency, etc.) of the microwaves, that are directed into the internal cavity 26, and the size and the quality of the acceptor material of the tubes, it is possible to let to do that the hot spots thereby generated and distributed in a casual manner into the above-said internal cavities may reach very high temperatures, also in the order of size comprised between about 1200° C and about 2600° C, that are sufficient to determine the heating of the smokes passing at these very high temperatures, and to dissociate the molecules of various compounds constituting the pollutant substances of the smokes, in order to let to come out from the present heating module 5 the smokes that contain an high percentage of single non-pollutant substances, that may therefore discharged subsequently in the environment by reducing considerably the pollution of the same.

In the above-aid description of the path of a microwave through the internal cavity 26 of the heating module 5 we have made reference to one microwave only, but such a description naturally refers also to all the microwaves generated by the magnetron 39 that through the above-described two lengthened tubes 32, indeed as it happens in the practice. Furthermore, the microwaves generated by one or more magnetron 39 arranged as visible in the figures, are directed also through any other lengthened tube secured into the internal chamber 26, in the present example in the third expected tube and visible in the fig. 4, which pass through the relative tubes along analogous paths, for obtaining the abatement of the smokes circulating through the correspondent tube with the same above-described effects.

It is now described some examples of smokes that may be produced with some types of combustibles with excess of air, as it normally happens in practice, which smokes may contain, in addition to the same excess of air, pollutant substances to be reduced with the device and with the process of the present invention.

### - Methane (gaseous fuel) :

Into the smoke there are present H2O (in the form of steam or micronizationed), CO2, O2, N2, nitric oxide (NOx, where 'x' is used for identify in a generic way all the nitric oxide, so it indicates the different number that may be of atoms of nitrogen bonded in various manner to atoms of oxygen) and particulates.

### - Combustible oil or diesel (liquid fuels):

Into the smoke there are present H2O (in the form of steam or micronizationed), CO2, CO, O2, N2, nitric oxide (NOx), Sulphur oxide (Sox, such initials identify the family of Sulphur oxides, SO, S2O2, SO2; they depend by the contents of Sulphur into the fuel) and particulates.

### - Biomasses (solid fuel):

Into the smoke there are present H2O (in the form of steam or micronizationed), CO2, CO, O2, N2, nitrogen oxides (NOx), Sulphur oxides (Sox) and particulates.

Fundamentally, the biomass produces particulates because the physic characteristics of a piece of wood or of a single pellet are such to make the combustion more difficult than the one of the other traditional fuels (liquids like diesel or gaseous like methane gas). By simplifying a process that is rather complex, a difficult combustion determines the presence of an high number of unburnt carbon particles, to which it is to add all the volatile components that be free during the various combustion phases and that, by condensing around solid micro particles, increase further the particulates mass.

Also the liquid and gaseous fuels may produce, therefore, particulates or CO, this will depend by the type of fuel, by the technology and the modality f managing the plant.

### Temperatures of the smokes:

The temperature of the smokes depends by the plant potential. Approximately, for a medium sized plant, the temperatures of the smokes for the various fuels are:
- methane gas: 100°C-150°C :
- combustible oil: 200°C-250°C :
- diesel: 160°C-220°C ;
- wood/pellet fuel: 250°C-300°C.

It is now described shortly the process of treatment and abatement of liquid, gaseous and/or pollutant substances of various kind contained into the exhaust smokes, that is effected into the abatement device described in the possible above-described embodiments of the same device, wherein the device is constituted by the above-said component parts, for conducting the above-described functions.

This process is conducted by using in particular the heating module 5 of the device according to the invention, formed by the above-described component parts, in a manner to treat and to reduce in the most ample possible measure the pollutant substances contained into the exhaust smokes derived from the combustion processes of the pollutant substances, produced by various sources, and in particular but not exclusively in the case of using of civil or industry thermal plant, and of traffic of vehicles powered by explosion engines. According to the present invention, the combustion of the pollutant substances to be reduced is carried out into the combustion chamber 19, from which the smokes containing pollutant substances that's develops are, as already described, let to pass at first through said heating module 5, and then through the flue 6 of the present device, from which the reduced smokes in elevate percentages are then discharged in the outside environment, directly or prior passage through said cooling module 73.

The present process comprises the following phases:
- production of microwaves by means of a magnetron 39, applied to said heating module 5, when the warm smokes containing pollutant substances produced by the combustion are circulating in the internal cavities of one or more of said lengthened tubes 32 made of acceptor material that are internally fixed to the heating module, and are directed toward the exiting end portion of the same module;
- transmission of the microwaves produced by the magnetron 39 through the through holes 38 of the lengthened container 27 made of metallic material seal do microwaves, containing said lengthened tubes 32 closed by said insulating material 34, said microwaves passing in sequence at first through said insulating material 34 and then through all the peripheral walls 33 and the internal cavities 92 of the lengthened tubes 32, the acceptor material of which produces infrared radiations that radiate into the internal cavity of the same tube, by determining a further heating of the circulating warm smokes, and a simultaneous multiple reflection of the microwaves into the internal cavities delimited between the peripheral walls 33 of each tube 32;
- production, caused by the multiple reflections of the microwaves between the peripheral wall of each tube and the contact of the microwaves with high temperatures, with the nonhomogeneties and the different densities of the gas contained into the circulating smokes, the peaks of energy of the microwaves (named hotspots) that are surprisingly distributed in an casual manner and in to variable and different positions into the internal cavities of all tubes, in such a way that, by dimensioning opportunely both the characteristics (power, intensity, frequency, etc.) of the microwaves, that are passing through the internal chamber 26, and the size and the quality of the acceptor material of the lengthened tubes 32, the hot spots thereby generated and distributed in a casual manner may reach very high temperatures, also in the order of size comprised between about 1200° C and about 2600° C, for heating the smokes at these very high temperatures, thereby by dissociating the molecules of various compounds constituting the pollutant substances of the smokes, with the consequent discharge in to the atmosphere of smokes with an high percentage of nonpo luting single component substances.

## Claims

1. Device for abatement of liquid, gaseous and/or solid pollutant substances of various kind, produced by various sources, which are contained in the exhaust smokes deriving from the combustion processes of pollutant substances of various kind, and in particular but not exclusively in the case of use of civil or industrial thermic plants, and the traffic of vehicles powered by explosion engines, the combustion of the pollutant substances happening into at least a combustion chamber (19) communicating with the inlet of at least one flue (6) and with a dedicated microwave generator (magnetron) providing correspondent waveguides connected sealingly between the microwave generator and openings, the smokes, reduced of an elevate percentage of pollutant substances of the same smokes, exit from the outlet (48) of the flue (6), **characterized by** at least a heating module (5), communicating with inlet and the outlet (48) of said flue (6), and comprising an outer envelope (8) which is made of a metallic material, withstanding the high temperatures and impermeable at the microwaves, into which there is inserted and fixed, with the interposition of an insulating material (31) as for example mineral wool, at least a lengthened internal cylindrical container (27) made of mechanically withstanding metallic material and impermeable for microwaves, shaped with a peripheral wall (28) joined at its end portions by lower (29) and upper (30) joining means constituted of materials with the same characteristics, delimiting at least an inner chamber (26), multi-modal or with dimensions greater than the electromagnetic wave spreading inside thereof, one or more lengthened tubes (32) being housed and secured into said lengthened internal container (27), these tubes (32) are passed through into the inner cavities thereof by the smokes, preferably circulating for natural draught, said lengthened tubes (32) being made of acceptor material, preferably silicon carbide or zirconia, with characteristics such to reflect , to absorb, such to generate an infrared radiation and therefore an heating, and to allow the absorption of the energy flow of the microwaves that arrive on to the surface of said lengthened tubes (32), said lengthened tubes (32) being externally covered for almost the whole extension thereof by an insulating material (34) suitable to withstand to temperatures comprise preferably between -50°C and 3000°C, and with characteristics of radio-transparency to the frequencies comprised between 0,2 GHz and 5 GHz, therefore to the microwaves frequencies, and the surfaces of the lower and upper end portions of such an internal insulating material (34) being covered by a respective plug means (35 and 36) of the same insulating material, which are secured on to the same surfaces, and are bored for permitting the passage of smokes in the interior thereof and are joined with the inlet and the outlet (48) of said flue (6), respectively, said heating module (5) being also provided with a plurality of through openings (38) provided through the outer envelope (8) and the vertical peripheral wall (28), in positions coinciding to each other, and communicating with at least the dedicated microwave generator (39) (magnetron), through the correspondent waveguides (40) connected sealingly between the microwave generator (39) and the through openings (38), in such a way that the microwaves generated by the generator (39) be distributed, directed and let to interfere with the material constituting the vertical tubes (32), by passing through said insulating materials (31, 34), said microwave generator (39) may be regulated in such a way as to generate microwaves with a power comprised preferably between 200 W and 20000 W, which microwaves decrease of energy passing at first through internal insulating material (34), and then passing through said lengthened tubes (32) generate infrared radiations that radiate into the relative internal cavity (92) of said lengthened tubes (32), by determining a further heating of the circulating hot smokes, and a simultaneous multiple reflection of the microwaves into said internal cavities (92), in such a way that, caused by the repeated reflections of the microwave into the internal cavities (92) and of its contact with the high temperatures, with the nonhomogeneties and the different densities of the gas contained into the circulating smokes, there are generated peaks of energy of the microwaves named hotspots into said internal cavities (92), that are not distributed in an orderly and homogenous manner into the same internal cavities, but are surprisingly distributed in an casual manner and in variable and different positions into the same internal cavities, in a way that, by dimensioning opportunely both the characteristics of the microwaves, that are directed into the internal cavity (26), and the size and the quality of the acceptor material of the tubes (32), the hot spots thereby generated and distributed in a casual manner into the above-said internal cavities may reach very high temperatures, also in the order of size comprised preferably but not necessary between about 1200° C and about 2600° C, that are sufficient to determine the heating of the smokes passing at these very high temperatures, and to dissociate the molecules of various compounds constituting the pollutant substances of the smokes, in order to discharge in the environment the smokes that contain an high percentage of single non-pollutant substances, by reducing considerably the pollution of the same, which smokes during the contact with the lower room temperatures may not therefore combine to each other for forming again the pollutant substances.

2. Device according to claim 1, **characterized in that** said smokes may contain in part or principally one or more of the following substances :
- Methane (gaseous fuel) :
Into the smoke there are present H2O (in the form of vapor or micronizationed), CO2, O2, N2, nitric oxide and particulates.
- Combustible oil or diesel (liquid fuels):
Into the smoke there are present H2O (in the form of vapor or micronizationed), CO2, CO, O2, N2, nitric oxide (NOx), Sulphur oxide and particulates.
- Biomasses (solid fuel):
Into the smoke there are present H2O (in the form of vapor or micronizationed), CO2, CO, O2, N2, nitrogen oxides (NOx), Sulphur oxides and particulates.

3. Device according to claim 1, **characterized in that** said metallic outer envelope (8) is closed at its lower end portion by a flat closing disc (9) preferably of circular shape, which is also made of mechanically withstanding metallic material and impermeable at the microwaves, which may be of the same type of material of the outer envelope (8), said disc (9) being joined sealingly with a short vertical cylindrical sleeve (10) directed downward, also of metallic material having the same characteristics of the preceding metallic materials, which is bored axially and internally for its entire length for communicating with said inner chamber (26), said vertical sleeve (10) being welded at its lower end portion with a flat joining flange (11), made of mechanically withstanding metallic material, adapted to withstand the high temperatures of the contact with the gases deriving from the combustion and stable at the high temperatures, the joining flange (11) being screwed on or fixed sealingly to the correspondent end portion of a circulation tubular conduit (12), and being provided with a central through hole (13) coinciding with the hole of the sleeve (10); **that** said conduit (12) is shaped with a curved elbow (14) directed upward in the fixing zone of the joining flange (11), and is extended with a portion of horizontal conduit (15) directed toward the flue (6), and passing through a through hole (16) of the lower zone of the flue (6), by joining itself with its other end portion with a curved elbow (17) directed downward, and housed into a vertical conduit (18) joined with said combustion chamber (19), **that** in the interior of the tubular conduit (12) it is housed in a stationary manner a further tubular conduit (20), having a diameter smaller than that of the preceding conduit (12) and shaped in the same way and with the same length thereof, wherein one of the end portions of said further conduit (20) is joined sealingly by means of a curved elbow (21) directed upward with said joining flange (11) and said sleeve 10, in a manner that the inner cavity of the further conduit (20) coincides with the hole of the sleeve (10), between said tubular conduits (12) and (20) it being arranged an insulating material, as for example the mineral wool; and finally **that** said metallic outer envelope (8) is also closed at its opposite end portion, from which the smokes are coming out, with a flat closing disc (22), preferably of circular shape, which is joined sealingly with a short vertical cylindrical sleeve (23) directed upward, which sleeve is welded at its upper end portion with a flat joining flange (24), which is secured sealingly with the inlet end portion of an shaped outlet tube (25), the end portion of which is joined to the internal upper part of the flue (6), and **that** also in this case, the upper closing disc (22) and the vertical sleeve (23) are made of the same
material and shaped in the same manner of the correspondent elements of the lower end portion of said outer envelope (8).

4. Device according to claim 3, **characterized in that** into the circulation conduit (12) there are provided some through holes (41), for the insertion and the fixing of sensors means, which are calibrated for detecting the parameters relating to the circulating smokes, and in particular the flow rate, the temperature and the composition of smokes entering the flue (6) through the conduit (18) and passing through said circulation conduit (12), wherein like measuring flow rate sensor means flow rate sensor it may be utilized at least one measuring instrument for the differential pressure, like sensor means for temperature and composition of smokes it may be utilized at least a per se known smoke analyzer of professional type, together with the electric and electronic components of the magnetron (39) and the other electric components pertaining to the other component parts of the present device.

5. Device according to claims 1-4, **characterized in that** at least a valve element (42), constituted by a gate valve, is moreover mounted in to the interior of the circulation conduit (12), which valve element is connected to a regulating hand grip (43) secured externally the conduit (12), and which may be actuated, manually or automatically, for actuating the valve element (42) from a closing position to a semi-closed or an opened position of the path for circulating the smokes through said conduit (12), and vice versa, for the purpose to allow completely, partially or to prevent the circulation of smokes through the same conduit; **that** in the internal chamber (44) of the flue (6) is also mounted at least an additional valve element (45), in an higher position with respect to that of the preceding valve element (42), and also this additional valve element (45) is constituted by a gate valve and is also connected to a regulation hand grip (46) secured to the outer wall (47) of the flue (6), and which can be actuated, like the previous one, for displacing said valve element (45) from a semi-opened or opened position to a closing position of the circulation path of smokes through said internal chamber (44), and, therefore, to allow completely, partially or to prevent the circulation of smokes through the entire same internal chamber, in such a way that by acting on to either one or to both said above-said gate valves, it is possible, to perform the following operations :
- actuation in the opened position of the additional valve element (45) and in the closing position of the valve element (42), condition in which the smokes pass through the vertical conduit (18) and are forced to enter directly into the internal chamber (44) of the flue (6), so that such smokes pass through such an internal chamber (44) in the rising direction B, by coming out from the opened upper opening (48) of the flue (6) and by dispersing them in the external environment, and they cannot pass through the further conduit (20) which is closed by said valve element (42) and therefore they do not pass through the heating module (5) and aren't treated for the abatement, thereby determining a pollution of the external environment ;
- actuation in the closing position of the additional valve element (45) and in the opened position of the valve element (42), condition in which the smokes do not pass through the internal chamber (44) of the flue (6), **in that** the valve element (45) is closed, but they are diverted through the conduit (20) and through the heating module (5), **in that** the valve element (42) is opened, and afterwards such smokes circulate through the cavities of the vertical tubes (32) in the rising direction A, in which such smokes are purified on a large extent from the pollutant substances, and finally they are discharged outwards almost completely purified from the pollutant substances, by passing through the upper part and the opened upper opening (48) of the flue (6).

6. Device according to claim 5, **characterized in that** said tube outlet tube (25) is shaped like an elbow (49) bent orthogonally and joined to an end portion of a portion of horizontal tube (50), the other end portion of which is joined to the upper part of the outer wall (47) of the flue (6), in the interior of the outlet tube (25) a smoke discharging conduit (51) is housed, shaped at its one end portion with an elbow (52) in correspondence of the elbow (49) of the outlet tube (25), which is joined with the internal through cavity of said vertical sleeve (23), and the other end portion of which passes through a correspondent through hole (53) provided through the outer wall (47) of the flue (6), in the upper part of this latter, and such an end portion is joined with a further short elbow (54) directed upward and housed into the internal chamber (44) of the same flue, for discharging in this manner externally, through the outlet opening (48), the smokes purified on a large extent from the pollutant substances, between said conduit (51) and the tube (50) an insulation is arranged and is formed preferably by mineral wool.

7. Device according to claim 6, **characterized in that** in the portion of horizontal tube (50), near the outlet of said heating module (5), there are provided at least two through holes (55, 56), through which relative detecting means are introduced, for detecting the flow rate, the temperature and the composition of smokes coming out from the heating module (5) toward the flue (6), such detecting means being electrically connected to said control central station of the present device; finally, in the flue (6) there are provided a lower through hole (57)
and at least two upper through holes (58, 59), for passing correspondent detecting means, of which the lower ones are adapted to detect the flow rate of the smokes entering the internal chamber (44) of the flue (6), while the upper ones are adapted for detecting the flow rate, the temperature and the composition of smokes passing through said internal chamber (44), when the gate valve (45) of the flue (6) is opened, said detecting means being also electrically connected to such control central station.

8. Device according to claim 6, **characterized in that** said module (5) is housed and adequately secured in the interior of the flue (6), which in this case is shaped larger and longer than the preceding one, and to this aim it is shaped with a closed and inclined circular lower wall, having inclinations (60, 61) which are symmetrical to each other, the lower part of which is joined to the conduit (18) of the combustion chamber (19), and the upper part of which is joined to the cylindrical outer wall (62) of the flue (6), which is enlarged and lengthened in a manner to be able to house said heating module (5) of smokes, the upper part of the flue (6) being also shaped with an inclined circular upper wall, having inclinations (63, 64) symmetrical to each other and opposite to those of the lower wall, and in the upper wall it is also provided the upper opening (48) of the flue (6), from which the smokes purified at a large extent from the pollutant substances are coming out, which circulate upward in the direction A and are conveyed in the interior of the heating module (5) through an inclined opened circular wall, having inclinations (65, 66) symmetrical to each other, which wall is joined to the inlet of the heating module (5) through a portion of conduit (67) with cylindrical shape; also in this case, it being provided at least a magnetron, which is secured preferably externally the outer wall (62) of the flue (6), and is still communicating through some wave guides with the lengthened tubes arranged in the interior of the outer envelope of the heating module (5), and the outlet of the heating module (5) being joined to a short cylindrical conduit (68) and an inclined circular upper wall, having inclinations (69, 70) symmetrical to each other, which is communicating to the outlet opening (48) for discharging the smokes outside, said heating module (5) having a natural draught, therefore in this case it is obtained a self-regulating system, under the condition **in that** the module (5) doesn't operate, the smokes pass without being treated both in the interior and outside the same module and, if the module (5) is lightening, it will has a natural draught that will let pass only the smokes that may be treated, without that it is verified a stoppage of the flue.

9. Device according to claim 8, **characterized in that** also a cooling module (73) for smokes, formed at least by one heat exchanger, adapted to cool down the smokes after their depuration at temperatures such to prevent the recombination of the substances reduced at the exit of the same heat exchanger, said heat exchanger (73) being connected with its inlet and its outlet to the exit of the heating module (5) and to the flue (6), in to the upper part of the same flue, respectively, **that** the heat exchanger (73) is substantially constituted by a central body (74) that is extended in the horizontal direction, which is shaped preferably with a cylindrical shape and is equipped with a set of horizontal through tubes (75) separated to each other and realized through the central body (74) and in the lengthwise of the same, provided for the passage of the smokes to be cooled down, such tubes extending themselves from the end portion of the inlet to the end portion of the outlet od the heat exchanger (73), said central body (74) being completely covered by an external envelope (76), defining therefore an internal chamber for allowing the circulation of the air for cooling the heat produced by the smokes passing through the through tubes (75), which air is sucked in the C direction through a short opened and upright inlet filler (77), fixed to the upper part of the external envelope (76) and directed upward, and, after to have passed through the internal chamber and cooled down the central body (74), such and heated air is discharged outside through a opened and upright outlet filler (78), fixed to the lower part of the external envelope (76), the inlet of said heat exchanger (73) being formed by said inlet tube (25), that is shaped also like an elbow (49) joined at a side to a horizontal portion of tube (79),the end portion thereof is sealingly joined to the side wall (80) of the external envelope (76), such an elbow (49) being also shaped like in precedence for being joined to the exit upper part of the heating module (5) in the above-described way, and the outlet of the heat exchanger (73) being formed by a portion of the horizontal tube (81), an end portion thereof is sealingly joined to the other side wall (82) of the external envelope (76) and the other end portion thereof penetrates into the internal chamber of the flue (6), therefore for discharging the cooled down smokes outward.

10. Device according to claim 9, **characterized in that** into the horizontal tube portion (79), at the inlet of the heat exchanger (73), two through holes (55, 56) are also provided for inserting relative detecting means for detecting the temperature, the flow rate and the composition of the smokes, such detecting means being electrically connected to said control central station; into the horizontal tube portion (81), at least two through holes (83, 84) are provided to the outlet of the heat exchanger (73), for the passage of correspondent detecting means for detecting the flow rate, the temperature and the composition of the smokes coming out from the cooling module (73) toward the outlet (48) of the flue (6), such detecting means being also electrically connected to the said control central station, furthermore, said three through holes (57, 58, 59) being provided into the flue (6).

11. Device according to claim 10, **characterized in that** said heating (5) and cooling (73) modules of the smokes are again joined to each other and arranged slightly spaced away to each other in the vertical direction and are housed into and opportunely fixed to the internal space of the flue (6), that also in this case is shaped larger and longer than the previous on, and is also shaped with a closed and inclined lower circular wall, the lower part of which is joined to the conduit (18) of the combustion chamber (19) and the upper part of which is joined to the external circular part (62) of the flue (6), that is enlarged and lengthened in a way to be able to house said heating module (5) and cooling (73) modules of the smokes, the upper part of the flue (6) being also shaped with an inclined circular upper part and, in to the upper wall, and upper opening (48) of the flue (6) being also provided, from which the smokes purified at a large extent from the pollutant substances are coming out, and also in this case, the smokes produced by the combustion of the products into the combustion chamber (19) circulating upward in the direction A, by passing through the conduit (18) and being conveyed in the interior of the heating module (5) by natural draught, also in this case, the cooling module (73) being connected with its inlet filler (77) to the outside, letting to pass such a filler through a correspondent hole of the external wall (62), and by connecting its outlet filler (78) to the conduit (85), passing through a correspondent through hole of the external wall (62), and joined with a pump (86), in turn joined with the combustion chamber (19) through a short conduit (87), all this in order to conveying the warm air that is coming out from the heat exchanger (73) in the C circulation direction into the same combustion chamber, for increasing the comburent air into this chamber and thereby improving the combustion of the products.

12. Process for abatement of liquid, gaseous and/or solid pollutant substances of various kind, contained into the exhaust smokes, providing the device according to claims 1-11 comprising an heating module (5), at least a magnetron (39), a flue (6), a combustion chamber (19), **characterized in that** the process comprises the following phases:
- production of microwaves by means of a magnetron (39), applied to said heating module (5), when the hot smokes containing pollutant substances produced by the combustion are circulating in the internal cavities of one or more of said lengthened tubes (32) made of acceptor material that are internally fixed to the heating module, and are directed toward the exiting end portion of the same module;
- transmission of the microwaves produced by the magnetron (39) through the through holes (38) of the lengthened container (27), containing said lengthened tubes (32) closed by said insulating material (34), said microwaves passing in sequence at first through said insulating material (34) and then through all the peripheral walls (33) and the internal cavities (92) of the lengthened tubes (32), the acceptor material of which produces infrared radiations that radiate into the internal cavity of the same tube, by determining a further heating of the circulating warm smokes, and a simultaneous multiple reflection of the microwaves into the internal cavities delimited between the peripheral walls (33) of each tube (32);
- production, caused by the multiple reflections of the microwaves between the peripheral wall of each tube (32), and the contact of the microwaves with high temperatures, with the nonhomogeneties and the different densities of the gas contained into the circulating smokes, the peaks of energy of the microwaves named hotspots that are surprisingly distributed in an casual manner and in to variable and different positions into the internal cavities of all tubes, in such a way that, by dimensioning opportunely both the characteristics of the microwaves, that are passing through the internal chamber (26), and the size and the quality of the acceptor material of the lengthened tubes (32), the hot spots thereby generated and distributed in a casual manner may reach very high temperatures, also in the order of size comprised between about 1200° C and about 2600° C, for heating the smokes at these very high temperatures, thereby by dissociating the molecules of various compounds constituting the pollutant substances of the smokes, with the consequent discharge in to the atmosphere of smokes with an high percentage of nonpolluting single component substances.

## Patentansprüche

1. Vorrichtung zur Beseitigung von flüssigen, gasförmigen und/oder festen Schadstoffen verschiedener Art, die von verschiedenen Quellen hergestellt werden und in den Rauchgasen enthalten sind, die sich aus den Verbrennungsprozessen von Schadstoffen unterschiedlicher Art ergeben, insbesondere, aber nicht ausschließlich bei der Verwendung von zivilen oder industriellen thermischen Anlagen; und dem Verkehr von Fahrzeugen mit Explosionsmotoren, der Verbrennung der Schadstoffe, die in mindestens einer Verbrennungskammer (19) stattfinden, die mit dem Einlass von mindestens einem Rauchfang (6) kommuniziert, und mit einem speziellen Mikrowellengenerator (Magnetron), der korrespondierende Wellenleiter bereitstellt, die dich zwischen dem Mikrowellengenerator und Öffnungen verbunden sind, wobei der Rauch reduziert um einen erhöhten Prozentsatz der Schadstoffe desselben Rauchs, aus dem Auslass (48) des Rauchfangs (6) austritt,
**gekennzeichnet durch** mindestens ein Heizmodul (5), das mit dem Einlass und dem Auslass (48) des besagten Rauchfangs (6) in Verbindung steht und eine äußere Hülle (8) enthält, die aus einem metallischen Material besteht, das den hohen Temperaturen standhält und für Mikrowellen undurchlässig ist, in die ein Isoliermaterial (31) wie z.B. Mineralwolle eingesteckt und fixiert ist, mindestens einen langgestreckten zylindrischen Innenbehälter (27) aus mechanisch widerstandsfähigem metallischen Material und undurchlässig für Mikrowellen, der mit einer Umfangswand (28) geformt ist, die an ihren Endabschnitten durch untere (29) und obere (30) Verbindungsmittel aus Materialien mit den gleichen Eigenschaften verbunden ist, die mindestens eine innere Kammer (26) begrenzen,
multimodal oder mit Abmessungen, die größer sind als die elektromagnetische Welle, die sich im Inneren ausbreitet,
ein oder mehrere längliche Rohre (32), die in diesem länglichen Innenbehälter (27) untergebracht und gesichert sind, wobei diese Rohre (32) durch Rauchgase in ihren inneren Hohlräumen durchströmt werden, vorzugsweise für natürlichen Luftzug zirkulierend, wobei die länglichen Rohre (32) aus Akzeptormaterial vorzugsweise Siliziumkarbid oder Zirkoniumdioxid, hergestellt sind, mit Eigenschaften wie zu reflektieren, zu absorbieren, wie eine Infrarotstrahlung und damit eine Erwärmung zu erzeugen, und um die Absorption des Energieflusses der Mikrowellen zu ermöglichen, die auf der Oberfläche der genannten länglichen Rohre (32) ankommen, wobei die länglichen Rohre (32) außen über fast die gesamte Ausdehnung durch ein Isoliermaterial (34) bedeckt sind, das geeignet ist, um Temperaturen von vorzugsweise -50°C bis 3.000 °C standzuhalten, und mit Merkmalen der Radiotransparenz für Frequenzen zwischen 0,2 GHz und 5 GHz, also für die Mikrowellenfrequenzen, und wobei die Oberflächen der unteren und oberen Endabschnitte eines solchen inneren Isoliermaterials (34) mit einer entsprechenden Stopfeneinrichtung (35 und 36) desselben Isoliermaterials abgedeckt sind, die auf den gleichen Flächen befestigt sind und für den Durchgang von Rauch im Inneren gebohrt sind und mit dem Einlass und dem Auslass (48) des genannten Rauchfangs (6) verbunden sind, wobei das Heizmodul (5) auch mit einer Vielzahl von Durchgangsöffnungen (38) versehen ist, die durch die äußere Hülle (8) und die vertikale Umfangswand (28) verlaufen, die sich an miteinander übereinstimmen Positionen befinden und über die entsprechenden Wellenleiter (4) mit mindestens dem dedizierten Mikrowellengenerator (39) (Magnetron) kommunizieren,
die dicht zwischen dem Mikrowellengenerator (39) und den Durchgangsöffnungen (38) angeschlossen sind,
auf solche Weise, dass die vom Generator (39) erzeugten Mikrowellen verteilt, gerichtet und
mit dem Material, das die vertikalen Rohre (32) bildet, interferieren, indem sie durch die Isoliermaterialien (31, 34) hindurchgehen, wobei der Mikrowellengenerator (39) so reguliert werden kann, dass er Mikrowellen mit einer Leistung vorzugsweise zwischen 200 W und 20000 W erzeugt, wobei die Energie der Mikrowellen abnimmt, die zuerst durch das innere Isoliermaterial (34) hindurchgeht und dann durch die länglichen Rohre (32) hindurchgeht, Infrarotstrahlungen erzeugen, die in den entsprechenden inneren Hohlraum (92) der länglichen Rohre (32) strahlen, indem eine weitere Erwärmung des zirkulierenden heißen Rauchs bestimmt wird, und eine gleichzeitige Mehrfachreflexion der Mikrowellen in die genannten inneren Hohlräume (92), derart, dass durch die wiederholten Reflexionen der Mikrowelle in die inneren Hohlräume (92) und durch ihren Kontakt mit den hohen Temperaturen, mit den Inhomogenitäten und den unterschiedlichen Dichten des in den zirkulierenden Rauch enthaltenen Gases Energiespitzen der Mikrowellen, die als Hotspots bezeichnet werden, in den genannten inneren Hohlräumen (92) erzeugt werden, die nicht in geordneter und homogener Weise in denselben inneren Hohlräumen verteilt sind, sondern zufällig auf eine beiläufige Weise und in variablen und unterschiedlichen Positionen in denselben inneren Hohlräumen verteilt sind, und zwar auf eine Weise, daß durch eine geeignete Dimensionierung sowohl der Eigenschaften der Mikrowellen, die in den inneren Hohlraum (26) gerichtet sind, als auch der Größe und der Qualität des Akzeptormaterials der Röhren (32), die dadurch erzeugten und auf eine beiläufige Weise in den oben genannten inneren Hohlräumen verteilten Hot Spots sehr hohe Temperaturen erreichen können, und zwar auch in der Größenordnung, die vorzugsweise, aber nicht notwendig, zwischen etwa 1200° C und etwa 2600° C liegt, die ausreichen, um die Erwärmung der bei diesen sehr hohen Temperaturen vorbeiziehenden Rauchgase zu bestimmen und die Moleküle der verschiedenen Verbindungen, aus denen die Schadstoffe der Rauchgase bestehen, zu dissoziieren, um die Rauchgase, die einen hohen Anteil an einzelnen nicht schadstoffhaltigen Stoffen enthalten, in die Umwelt abzugeben, indem die Verschmutzung derselben erheblich verringert wird, die beim Kontakt mit den niedrigeren Raumtemperaturen rauchen und sich daher nicht miteinander verbinden dürfen, um erneut die Schadstoffe zu bilden.

2. Vorrichtung nach Anspruch 1,
**dadurch gekennzeichnet, dass** die Rauchgase teilweise oder hauptsächlich eine oder mehrere der folgenden Substanzen enthalten können :
- Methan (gasförmiger Brennstoff) :
In dem Rauch sind H2O (in Form von Dampf oder mikronisiert), CO2, O2, N2, Stickstoffmonoxid und Partikel vorhanden.
- Brennbares Öl oder Diesel (flüssige Brennstoffe):
Im Rauch befinden sich H2O (in Form von Dampf oder mikronisiert), CO2, CO, O2, N2, Stickstoffmonoxid (NOx), Schwefeloxid und Partikel.
- Biomasse (fester Brennstoff):
Im Rauch sind H2O (in Form von Dampf oder mikronisiert), CO2, CO, O2, O2 enthalten,
N2, Stickstoffoxide (NOx), Schwefeloxide und Partikel.

3. Vorrichtung nach Anspruch 1,
**dadurch gekennzeichnet, dass** die metallische Außenhülle (8) an ihrem unteren Endabschnitt durch eine flache, vorzugsweise kreisförmige Verschlussscheibe (9) verschlossen ist, die ebenfalls aus mechanisch widerstandsfähigem metallischem Material hergestellt und für Mikrowellen undurchlässig ist, die
aus dem gleichen Materialtyp wie die äußere Hülle (8) bestehen, wobei die Scheibe (9) abdichtend mit einer kurzen vertikalen zylindrischen Hülse (10) verbunden ist, die nach unten gerichtet ist, ebenfalls aus metallischem Material mit den gleichen Eigenschaften der vorhergehenden metallischen Materialien, die axial und innen gebohrt ist
über ihre gesamte Länge zur Verbindung mit der Innenkammer (26), wobei die vertikale Hülse (10) an ihrem unteren Endabschnitt mit einem flachen Verbindungsflansch (11) verschweißt ist, der aus einem mechanisch widerstandsfähigen metallischen Material hergestellt ist, das geeignet ist, daß es den hohen Temperaturen des Kontakts mit den aus der Verbrennung stammenden Gasen widersteht und bei den hohen Temperaturen stabil ist, wobei der Verbindungsflansch (11) auf den entsprechenden Endabschnitt einer rohrförmigen Zirkulationsleitung (12) geschraubt oder dichtend daran befestigt ist und mit einem zentralen Durchgangsloch (13) versehen ist, das mit dem Loch der Hülse (10) zusammenfällt; dass die Leitung (12) mit einem gekrümmten Krümmer (14) geformt ist, der in der Befestigungszone des Verbindungsflansches (11) nach oben gerichtet ist, und mit einem Abschnitt einer horizontalen Leitung (15) verlängert ist, der zum Rauchfang (6) gerichtet ist und durch ein Durchgangsloch (16) der unteren Zone des Rauchfangs (6) verläuft, indem es sich selbst mit seinem anderen Endteil mit einem nach unten gerichteten gekrümmten Krümmer (17) verbindet, der in einer vertikalen Leitung (18) untergebracht ist, die mit der Brennkammer (19) verbunden ist, daß im Inneren der Rohrleitung (12) eine weitere Rohrleitung (20) stationär untergebracht ist, mit einem Durchmesser, der kleiner ist als der des vorhergehenden Kanals (12) und in gleicher Weise und mit gleicher Länge geformt ist, wobei einer der Endabschnitte des weiteren Kanals (20) mittels eines nach oben gerichteten gekrümmten Krümmers (21) dichtend mit dem Verbindungsflansch (11) und der Hülse (10) derart verbunden ist, daß der innere Hohlraum des weiteren Kanals (20) mit dem Loch der Hülse (10) zusammenfällt, wobei zwischen den rohrförmigen Kanälen (12) und (20) ein Isoliermaterial, wie z.B. die Mineralwolle, angeordnet ist; und schließlich, daß die metallische Außenhülle (8) an ihrem gegenüberliegenden Endteil, aus dem der Rauch austritt, ebenfalls mit einer flachen, vorzugsweise kreisförmigen Verschluss-Scheibe (22) verschlossen ist, die mit einer kurzen, nach oben gerichteten, vertikalen, zylindrischen Hülse (23) dichtend verbunden ist, wobei die Hülse an ihrem oberen Endabschnitt mit einem flachen Verbindungsflansch (24) verschweißt ist, der abdichtend mit dem Einlassendabschnitt eines geformten Auslassrohrs (25) befestigt ist, dessen Endabschnitt mit dem inneren oberen Teil des Kamins (6) verbunden ist, und dass auch in diesem Fall die obere Verschlussscheibe (22) und die vertikale Muffe (23) aus demselben hergestellt sind Material und in der gleichen Weise geformt wie die entsprechenden Elemente des unteren Endabschnitts der genannten äußeren Hülle (8).

4. Vorrichtung nach Anspruch 3,
**dadurch gekennzeichnet, dass** in der Zirkulationsleitung (12) einige Durchgangslöcher (41) zum Einsetzen und Befestigen von Sensormitteln vorgesehen sind, die kalibriert sind, um die Parameter in Bezug auf die zirkulierenden Rauchgase zu erfassen, insbesondere den Durchsatz, die Temperatur und die Zusammensetzung der Rauchgase, die durch die Leitung (18) in den Rauchfang (6) eintreten und die Zirkulationsleitung (12) durchströmen, wobei wie ein Durchflussmengensensormittel ein Strömungsmengensensor mindestens ein Messinstrument für den Differenzdruck, wie ein Sensormittel für Temperatur und Zusammensetzung von Rauch, mindestens ein an sich bekannter Rauchanalysator professioneller Art zusammen mit den elektrischen und elektronischen Komponenten des Magnetrons (39) und den anderen elektrischen Komponenten, die zu den anderen Komponenten der vorliegenden Vorrichtung gehören, verwendet werden kann.

5. Vorrichtung nach den Ansprüchen 1-4,
**dadurch gekennzeichnet, dass** mindestens ein Ventilelement (42), das aus einem Schieberventil gebildet ist, darüber hinaus im Inneren der Zirkulationsleitung (12) angebracht ist, wobei das Ventilelement mit einem außerhalb der Leitung (12) befestigten regulierenden Handgriff (43) verbunden ist und manuell oder automatisch betätigt werden kann, zum Betätigen des Ventilelements (42) aus einer Schließstellung in eine halbgeschlossene oder eine geöffnete Stellung der Bahn zur Zirkulation der Rauchgase durch die Leitung (12) und umgekehrt, um die Zirkulation der Rauchgase durch die Leitung ganz oder teilweise zuzulassen oder zu verhindern; dass in der Innenkammer (44) des Rauchfangs (6) auch mindestens ein zusätzliches Ventilelement (45) in einer höheren Position in Bezug auf die des vorhergehenden Ventilelements (42) angebracht ist, und dass auch dieses zusätzliche Ventilelement (45) von einem Schieberventil gebildet wird und auch mit einem Regelhandgriff (46) verbunden ist, der an der Außenwand (47) des Rauchfangs (6) befestigt ist und wie das vorhergehende betätigt werden kann, um das Ventilelement (45) von einer halb geöffneten oder geöffneten Position in eine geschlossene Position des Zirkulationsweges von Rauch durch die Innenkammer (44) zu verschieben und somit die Zirkulation von Rauch durch die gesamte Innenkammer vollständig, teilweise zu ermöglichen oder zu verhindern, so dass es durch Einwirken auf einen oder beide der oben genannten Schieberventile möglich ist, die folgenden Operationen durchzuführen :
- Betätigung in der geöffneten Stellung des zusätzlichen Ventilelements (45) und in der Schließstellung
des Ventilelements (42), ein Zustand, in dem die Rauchgase durch die vertikale Leitung (18) hindurchgehen und gezwungen werden, direkt in die innere Kammer (44) des Rauchfangs (6) einzutreten, so dass diese Rauchgase durch eine solche innere Kammer (44) in der Aufstiegsrichtung B hindurchgehen, indem sie aus der geöffneten oberen Öffnung (48) des Rauchfangs (6) herauskommen und sich in der äußeren Umgebung verteilen, und sie können nicht durch die weitere Leitung (20), die durch das Ventilelement (42) verschlossen ist, hindurchgehen, und daher gehen sie nicht durch das Heizmodul (5) und werden nicht zur Beseitigung behandelt, wodurch eine Verschmutzung der äußeren Umgebung bestimmt wird;
- Betätigung in der Schließstellung des zusätzlichen Ventilelements (45) und in der geöffneten Stellung
Position des Ventilelements (42), ein Zustand, in dem die Rauchgase nicht durch die Innenkammer (44) des Rauchfangs (6) hindurchgehen, indem das Ventilelement (45) geschlossen ist, sondern sie durch die Leitung (20) und durch das Heizmodul (5) umgeleitet werden, indem das Ventilelement (42) geöffnet ist, und danach solche Rauchgase durch die Hohlräume der vertikalen Rohre (32) in der Aufstiegsrichtung A zirkulieren, in der solche Rauchgase weitgehend von den Schadstoffen gereinigt werden, und schließlich werden sie fast vollständig gereinigt von den Schadstoffen nach außen abgeleitet, indem sie durch den oberen Teil und die geöffnete obere Öffnung (48) des Rauchfangs (6) strömen.

6. Vorrichtung nach Anspruch 5,
**dadurch gekennzeichnet, dass** das Auslassrohr (25) wie ein Krümmer (49) geformt ist, der orthogonal gebogen und mit einem Endabschnitt eines Abschnitts eines horizontalen Rohrs (50) verbunden ist, dessen anderer Endabschnitt mit dem oberen Teil der Außenwand (47) des Rauchfangs (6) verbunden ist, wobei im Inneren des Auslassrohrs (25) eine Rauchabzugsleitung (51) untergebracht ist, die an ihrem einen Endabschnitt mit einem Krümmer (52) entsprechend dem Kniestück (49) des Auslassrohrs (25) geformt ist, das mit dem inneren durchgehenden Hohlraum der vertikalen Hülse (23) verbunden ist, und dessen anderer Endabschnitt durch ein entsprechendes Durchgangsloch (53) in der Außenwand (47) des Rauchfangs (6) in dessen oberen Teil verläuft, und ein solcher Endabschnitt mit einem weiteren kurzen, nach oben gerichteten Krümmer (54) verbunden ist, der in der Innenkammer (44) des Rauchfangs untergebracht ist, um auf diese Weise durch die Austrittsöffnung (48) den weitgehend von den Schadstoffen gereinigten Rauch nach außen abzuführen, wobei zwischen dieser Leitung (51) und dem Rohr (50) eine Isolierung angeordnet, die vorzugsweise aus Mineralwolle gebildet ist.

7. Vorrichtung nach Anspruch 6,
**dadurch gekennzeichnet, dass** in dem Abschnitt des horizontalen Rohrs (50) in der Nähe des Auslasses des Heizmoduls (5) mindestens zwei Durchgangslöcher (55, 56) vorgesehen sind, durch die zugehörige Erfassungsmittel eingeführt werden, um die Durchflussmenge, die Temperatur und die Zusammensetzung des Rauchs zu erfassen, der aus dem Heizmodul (5) in Richtung des Rauchfangs (6) austritt, wobei diese Erfassungsmittel elektrisch mit der Steuerzentrale der Vorrichtung verbunden sind; schließlich sind in dem Rauchfang (6) ein unteres Durchgangsloch (57) und mindestens zwei obere Durchgangslöcher (58, 59) zum Durchführen von entsprechenden Erfassungsmitteln vorgesehen, von denen die unteren zum Erfassen der Durchflussmenge der in die Innenkammer (44) des Rauchabzugs (6) eintretenden Rauchgase geeignet sind, während die oberen zum Erfassen der Durchflussmenge, der Temperatur und der Zusammensetzung der Rauchgase geeignet sind, die die Innenkammer (44) passieren, wenn der Schieber (45) des Rauchfangs (6) geöffnet wird, wobei die Erfassungsmittel auch elektrisch mit einer solchen Steuerzentrale verbunden sind.

8. Vorrichtung nach Anspruch 6,
**dadurch gekennzeichnet, dass** das Modul (5) im Inneren des Rauchfangs (6) untergebracht und angemessen befestigt ist, der in diesem Fall größer und länger als der vorhergehende geformt ist, und zu diesem Zweck mit einer geschlossenen und geneigten kreisförmigen unteren Wand mit Neigungen (60) versehen ist, 61), die zueinander symmetrisch sind, deren unterer Teil mit der Leitung (18) der Brennkammer (19) verbunden ist und deren oberer Teil mit der zylindrischen Außenwand (62) des Rauchfangs (6) verbunden ist, der so vergrößert und verlängert ist, dass er das Rauchheizmodul (5) aufnehmen kann, wobei der obere Teil des Rauchfangs (6) ebenfalls mit einer geneigten, kreisförmigen oberen Wand geformt ist, mit Neigungen (63, 64), die symmetrisch zueinander und entgegengesetzt zu denen der unteren Wand sind, und in der oberen Wand auch die obere Öffnung (48) des Rauchfangs (6) vorgesehen ist, aus der der weitgehend von den Schadstoffen gereinigte Rauch austritt, die nach oben in Richtung A zirkulieren und im Inneren des Heizmoduls (5) durch eine geneigte, geöffnete, kreisförmige Wand mit zueinander symmetrischen Neigungen (65, 66) gefördert werden, wobei die Wand mit dem Einlass des Heizmoduls (5) durch einen Abschnitt einer Leitung (67) mit zylindrischer Form verbunden ist; wobei auch in diesem Fall mindestens ein Magnetron vorgesehen ist, das vorzugsweise außen an der Außenwand (62) des Rauchfangs (6) befestigt ist und noch über einige Wellenleiter mit den verlängerten Rohren in Verbindung steht, die im Inneren der Außenhülle des Heizmoduls (5) angeordnet sind, und wobei der Ausgang des Heizmoduls (5) mit einer kurzen zylindrischen Leitung (68) und einer geneigten kreisförmigen oberen Wand verbunden ist, mit
zueinander symmetrischen Neigungen (69, 70), die mit der Auslassöffnung (48) in Verbindung stehen zur die Ableitung des Rauchs nach außen, wobei das besagte Heizmodul (5) einen natürlichen Zug hat, wodurch in diesem Fall ein selbstregulierendes System erhalten ist, unter der Bedingung, dass das Modul (5) nicht funktioniert, der Rauch sowohl im Inneren als auch außerhalb desselben Moduls ohne Behandlung hindurchgeht, wobei dann, wenn das Modul (5) leichter wird, es einen natürlichen Zug hat, der nur den Rauch, der behandelt werden kann, hindurchgehen lässt, ohne dass eine Unterbrechung des Rauchfangs erfolgt.

9. Vorrichtung nach Anspruch 8,
**dadurch gekennzeichnet, dass** auch ein Kühlmodul (73) für Rauchgase, das mindestens aus einem Wärmetauscher besteht, geeignet ist, die Rauchgase nach ihrer Reinigung auf solche Temperaturen abzukühlen, um die Rekombination der am Ausgang desselben Wärmetauschers reduzierten Substanzen zu verhindern, wobei der Wärmetauscher (73) mit seinem Einlass und seinem Auslass mit dem Ausgang des Heizmoduls (5) und mit dem Rauchfang (6) verbunden ist, dass der Wärmetauscher (73) im Wesentlichen aus einem zentralen Körper (74) besteht, der sich in horizontaler Richtung erstreckt, vorzugsweise zylindrisch geformt ist und mit einem Satz horizontaler Durchgangsrohre (75) ausgestattet ist, die voneinander getrennt sind und durch den zentralen Körper (74) und in Längsrichtung desselben verlaufen, die für den Durchgang der zu kühlenden Rauchgase vorgesehen sind, wobei diese Rohre sich vom Endteil des Einlasses bis zum Endteil des Auslasses des Wärmetauschers (73) erstrecken, wobei der Zentralkörper (74) vollständig von einer äußeren Hülle (76) bedeckt ist und somit eine innere Kammer definiert, um die Zirkulation der Luft zur Kühlung der Wärme zu ermöglichen, die durch den Durchgang der Rauchgase durch die Rohre (75) erzeugt wird, wobei die Luft in der C-Richtung durch einen kurzen, offenen und aufrechten Einlassfüller (77) angesaugt wird, der am oberen Teil der äußeren Hülle (76) befestigt und nach oben gerichtet ist, und, nachdem sie durch die innere Kammer hindurchgegangen ist und den zentralen Körper (74) abgekühlt hat, diese und erwärmte Luft durch einen offenen und aufrechten Auslassfüller (78), der am unteren Teil der äußeren Hülle (76) befestigt ist, nach außen abgegeben wird, wobei der Einlass des Wärmetauschers (73) durch das Einlassrohr (25) gebildet wird, das auch wie ein Kniestück (49) geformt ist, das an einer Seite mit einem horizontalen Rohrabschnitt (79) verbunden ist,wobei der Endabschnitt desselben abdichtend mit der Seitenwand (80) der äußeren Hülle (76) verbunden ist, wobei ein solches Kniestück (49) auch wie vorhergehend geformt ist, um mit dem oberen Ausgangsteil des Heizmoduls (5) auf die oben beschriebene Weise verbunden zu werden, und der Auslass des Wärmetauschers (73) durch einen Abschnitt des horizontalen Rohrs (81) gebildet wird, wobei ein Endabschnitt desselben dichtend mit der anderen Seitenwand (82) der Außenhülle (76) verbunden ist und der andere Endabschnitt desselben in die Innenkammer des Rauchfangs (6) eindringt, also zum Abführen des abgekühlten Rauchs nach außen.

10. Vorrichtung nach Anspruch 9,
**dadurch gekennzeichnet, dass** in dem horizontalen Rohrabschnitt (79) am Einlass des Wärmetauschers (73) auch zwei Durchgangslöcher (55, 56) vorgesehen sind, um zugehörige Erfassungsmittel zum Erfassen der Temperatur, der Durchflussrate und der Zusammensetzung der Rauchgase einzusetzen, wobei solche Erfassungsmittel elektrisch mit der Steuerzentrale verbunden sind; wobei in dem horizontalen Rohrabschnitt (81) mindestens zwei Durchgangslöcher (83, 84) zum Ausgang des Wärmetauschers (73) für den Durchgang von entsprechenden Erfassungsmitteln zur Erfassung der Durchflussmenge, der Temperatur und der Zusammensetzung der aus dem Kühlmodul (73) zum Ausgang (48) des Rauchabzugs (6) austretenden Rauchgase vorgesehen sind, wobei diese Erfassungsmittel ebenfalls elektrisch mit der genannten Steuerzentrale verbunden sind, wobei außerdem die genannten drei Durchgangslöcher (57, 58, 59) im Rauchabzug (6) vorgesehen sind.

11. Vorrichtung nach Anspruch 10,
**dadurch gekennzeichnet, dass** die Heiz- (5) und Kühlmodule (73) der Rauchgase wieder miteinander verbunden und in vertikaler Richtung leicht voneinander beabstandet angeordnet sind und in dem Innenraum des Rauchfangs (6) untergebracht und zweckmäßigerweise daran befestigt sind, der auch in diesem Fall größer und länger geformt ist als der vorhergehende und ebenfalls mit einer geschlossenen und geneigten unteren kreisförmigen Wandung versehen ist, deren unterer Teil mit der Leitung (18) der Brennkammer (19) und deren oberer Teil mit dem äußeren kreisförmigen Teil (62) des Rauchfangs (6) verbunden ist, der so vergrößert und verlängert ist, dass sie das Heizmodul (5) und die Kühlmodule (73) der Rauchgase aufnehmen kann, wobei der obere Teil des Rauchfangs (6) ebenfalls mit einem geneigten kreisförmigen oberen Teil geformt ist und in die obere Wand hinein und eine obere Öffnung (48) des Rauchfangs (6) ebenfalls vorgesehen ist, aus dem die weitgehend von den Schadstoffen gereinigten Rauchgase austreten, und auch in diesem Fall die Rauchgase, die bei der Verbrennung der Produkte in der Brennkammer (19) entstehen, nach oben in Richtung A zirkulieren, indem sie die Leitung (18) durchlaufen und in das Innere des Heizmoduls geleitet werden (5) durch natürlichen Luftzug, auch in diesem Fall, wobei das Kühlmodul (73) mit seinem Einlassfüller (77) nach außen verbunden ist, wobei ein solcher Füller durch ein entsprechendes Loch der Außenwand (62) durchgelassen wird, und sein Auslassfüller (78) mit der Leitung (85) verbunden ist, die durch ein entsprechendes Durchgangsloch der Außenwand (62) verläuft, und mit einer Pumpe (86) verbunden ist, die ihrerseits über eine kurze Leitung (87) mit der Brennkammer (19) verbunden ist, all dies, um die warme Luft, die aus dem Wärmetauscher (73) in der C-Zirkulationsrichtung austritt, in dieselbe Brennkammer zu befördern, um die Verbrennungsluft in diese Kammer zu erhöhen und dadurch die Verbrennung der Produkte zu verbessern.

12. Verfahren zur Beseitigung von flüssigen, gasförmigen und/oder festen Schadstoffen verschiedener Art, die in den Abgasen enthalten sind, wobei die Vorrichtung nach den Ansprüchen 1 bis 11 ein Heizmodul (5), mindestens ein Magnetron (39), einen Rauchfang (6), eine Brennkammer (19) umfasst,
**dadurch gekennzeichnet, dass** das Verfahren die folgenden Phasen umfasst:
- Erzeugung von Mikrowellen mittels eines Magnetrons (39), das an das Heizmodul (5) angelegt wird, wenn die heißen Rauchgase, die durch die Verbrennung erzeugte Schadstoffe enthalten, in den inneren Hohlräumen eines oder mehrerer der verlängerten Rohre (32) aus Akzeptormaterial zirkulieren, die innen am Heizmodul befestigt sind und auf den austretenden Endabschnitt desselben Moduls gerichtet sind;
- Übertragung der durch das Magnetron (39) erzeugten Mikrowellen durch die Durchgangslöcher (38) des länglichen Behälters (27), der die genannten länglichen Rohre (32) enthält und durch das genannte Isoliermaterial (34) verschlossen ist, wobei die genannten Mikrowellen der Reihe nach zuerst durch das genannte Isoliermaterial (34) und dann durch alle Umfangswände (33) und die inneren Hohlräume (92) der länglichen Rohre (32) hindurchgehen, deren Akzeptormaterial Infrarotstrahlungen erzeugt, die in den inneren Hohlraum derselben Röhre strahlen, indem eine weitere Erwärmung der zirkulierenden warmen Rauchgase und eine gleichzeitige Mehrfachreflexion der Mikrowellen in die inneren Hohlräume, die zwischen den Umfangswänden (33) jeder Röhre (32) begrenzt sind, bestimmt wird;
- Erzeugung, verursacht durch die Mehrfachreflexionen der Mikrowellen zwischen der Umfangswand jedes Rohrs (32) und den Kontakt der Mikrowellen mit hohen Temperaturen, mit den Inhomogenitäten und den unterschiedlichen Dichten des in den zirkulierenden Rauchgasen enthaltenen Gases, der Energiespitzen der Mikrowellen, die als Hotspots bezeichnet werden, die zufällig und in variablen und unterschiedlichen Positionen in den inneren Hohlräumen aller Röhren verteilt sind, und zwar so, dass durch geeignete Dimensionierung sowohl die Eigenschaften der Mikrowellen, die die innere Kammer durchlaufen (26), und der Größe und der Qualität des Akzeptormaterials der länglichen Rohre (32) die dadurch erzeugten und zufällig verteilten Hot Spots sehr hohe Temperaturen erreichen können, auch in der Größenordnung zwischen etwa 1200° C und etwa 2600° C, um die Rauchgase bei diesen sehr hohen Temperaturen zu erhitzen, wodurch die Moleküle verschiedener Verbindungen, die die Schadstoffe der Rauchgase bilden, dissoziiert werden, mit der Folge, dass Rauchgase mit einem hohen Prozentsatz an nicht verschmutzenden Einkomponenten-Stoffen in die Atmosphäre abgegeben werden.

## Revendications

1. Dispositif de réduction de substances polluantes liquides, gazeuses et/ou solides de différents types, produites par différentes sources, qui sont contenues dans les fumées d'échappement dérivées des processus de combustion de substances polluantes de différents types, et en particulier, mais pas exclusivement dans le cas de l'utilisation de centrales thermiques civiles ou industrielles, et du trafic de véhicules motorisés par des moteurs à explosion, la combustion des substances polluantes survenant dans au moins une chambre de combustion (19) communiquant avec l'entrée d'au moins un carneau (6) et avec un générateur de micro-ondes (magnétron) dédié fournissant des guides d'ondes correspondants raccordés de façon étanche entre le générateur de micro-ondes et des ouvertures, les fumées, réduites d'un pourcentage élevé de substances polluantes des mêmes fumées, sortent par la sortie (48) du carneau (6), **caractérisé par** au moins un module de chauffage (5), communiquant avec une entrée et la sortie (48) dudit carneau (6), et comprenant une enveloppe externe (8) qui est constituée d'un matériau métallique, supportant les températures élevées et imperméable aux micro-ondes, dans lequel est inséré et fixé, avec l'interposition d'un matériau isolant (31) tel que, par exemple, de la laine minérale, au moins un récipient cylindrique interne allongé (27) constitué de matériau métallique mécaniquement résistant et imperméable aux micro-ondes, formé avec une paroi périphérique (28) assemblée au niveau de ses parties d'extrémité par des moyens d'assemblage inférieur (29) et supérieur (30) constitués de matériaux ayant les mêmes caractéristiques, délimitant au moins une chambre interne (26), multimodale ou ayant des dimensions plus grandes que l'onde électromagnétique se propageant à l'intérieur de celle-ci, un ou plusieurs tubes allongés (32) étant logés et fixés dans ledit récipient interne allongé (27), ces tubes (32) sont traversés dans les cavités internes de ceux-ci par les fumées, de préférence circulant par tirage naturel, lesdits tubes allongés (32) étant constitués d'un matériau accepteur, de préférence le carbure de silicium ou la zircone, ayant des caractéristiques permettant de réfléchir, absorber, de façon à générer un rayonnement infrarouge et, par conséquent, chauffer, et permettre l'absorption du flux d'énergie des micro-ondes qui arrivent sur la surface desdits tubes allongés (32), lesdits tubes allongés (32) étant recouverts de façon externe sur pratiquement toute leur longueur par un matériau isolant (34) adapté pour supporter des températures comprises de préférence entre -50 °C et 3000 °C, et ayant des caractéristiques de radio-transparence aux fréquences comprises entre 0,2 GHz et 5 GHz, par conséquent aux fréquences de micro-ondes, et les surfaces des parties inférieure et supérieure d'un tel matériau isolant interne (34) étant recouvertes de moyens de bouchage respectifs (35 et 36) du même matériau isolant, qui sont fixés sur les mêmes surfaces, et sont alésés pour permettre le passage de fumées à l'intérieur de ceux-ci et sont assemblés avec l'entrée et la sortie (48) dudit carneau (6), respectivement, ledit module de chauffage (5) étant en outre pourvu d'une pluralité d'ouvertures traversantes (38) disposées à travers l'enveloppe externe (8) et la paroi périphérique verticale (28), à des positions coïncidant les unes avec les autres, et communiquant avec au moins le générateur de micro-ondes (39) (magnétron) dédié, par l'intermédiaire de guides d'ondes (40) correspondants raccordés de façon étanche entre le générateur de micro-ondes (39) et les ouvertures traversantes (38), de telle manière que les micro-ondes générés par le générateur (39) soient distribués, dirigés et puissent interférer avec le matériau constituant les tubes verticaux (32), en traversant lesdits matériaux isolants (31, 34), ledit générateur de micro-ondes (39) peut être régulé de façon à générer des micro-ondes ayant une puissance comprise, de préférence, entre 200 W et 20 000 W, lesdites micro-ondes diminuant en énergie en passant dans un premier temps à travers le matériau isolant interne (34), puis en traversant lesdits tubes allongés (32), génèrent des rayonnements infrarouges qui irradient dans la cavité interne (92) respective desdits tubes allongés (32), en déterminant un chauffage supplémentaire des fumées chaudes circulantes, et une réflexion multiple simultanée des micro-ondes dans lesdites cavités internes (92), de telle manière que, sous l'effet des réflexions répétées de la micro-onde dans les cavités internes (92) et de son contact avec les températures élevées, avec les non-homogénéités et des différentes densités du gaz contenu dans les fumées circulantes, il est généré des pics d'énergie des micro-ondes appelés points chauds dans lesdites cavités internes (92), qui ne sont pas répartis de façon ordonnée et homogène dans les mêmes cavités internes, mais sont, de manière inattendue, distribués de façon aléatoire et à des positions variables et différentes dans les mêmes cavités internes, de telle manière que, en dimensionnant de manière appropriée à la fois les caractéristiques des micro-ondes, qui sont dirigées dans la cavité interne (26), et la taille et la qualité du matériau accepteur des tubes (32), les points chauds générés ainsi et répartis de façon aléatoire dans lesdites cavités internes ci-dessus peuvent atteindre des températures très élevées, également de l'ordre d'une plage comprise, de préférence mais pas nécessairement, entre environ 1200 °C et environ 2600 °C, qui sont suffisantes pour déterminer le chauffage des fumées passant à ces températures très élevées, et pour dissocier les molécules de différents composés constituant les substances polluantes des fumées, afin d'évacuer dans l'environnement les fumées qui contiennent un pourcentage élevé de substances non polluantes individuelles, en réduisant considérablement la pollution de celles-ci, lesdites fumées, pendant le contact avec les températures ambiantes inférieures ne peuvent, par conséquent, pas se combiner les unes avec les autres pour former à nouveau les substances polluantes.

2. Dispositif selon la revendication 1, **caractérisé en ce que** lesdites fumées peuvent contenir, en partie ou principalement, une ou plusieurs des substances suivantes :
- Méthane (combustible gazeux) :
Dans la fumée sont présents H2O (sous forme de vapeur ou micronisé), CO2, O2, N2, oxyde nitrique et particules.
- Huile combustible ou gasoil (combustibles liquides) :
Dans la fumée sont présents H2O (sous forme de vapeur ou micronisé), CO2, CO, O2, N2, oxyde nitrique (NOx), oxyde de soufre et particules.
- Biomasses (combustible solide) :
Dans la fumée sont présents H2O (sous forme de vapeur ou micronisé), CO2, CO, O2, N2, oxydes d'azote (NOx), oxydes de soufre et particules.

3. Dispositif selon la revendication 1, **caractérisé en ce que** ladite enveloppe externe métallique (8) est fermée au niveau de sa partie d'extrémité inférieure par un disque de fermeture plat (9), de préférence de forme circulaire, qui est également constitué de matériau métallique mécaniquement résistant et imperméable aux micro-ondes, qui peut être du même type de matériau que l'enveloppe externe (8), ledit disque (9) étant assemblé de façon étanche avec un manchon cylindrique vertical court (10) dirigé vers le bas, également d'un matériau métallique ayant les mêmes caractéristiques que les matériaux métalliques précédents, qui est alésé axialement et de façon interne sur toute sa longueur pour communiquer avec ladite chambre interne (26), ledit manchon vertical (10) étant soudé au niveau de sa partie d'extrémité inférieure avec une bride d'assemblage plate (11), constituée de matériau métallique mécaniquement résistant, adapté pour résister aux températures élevées du contact avec les gaz dérivés de la combustion et stable aux températures élevées, la bride d'assemblage (11) étant vissée sur ou fixée de façon étanche à la partie d'extrémité correspondante d'un conduit tubulaire de circulation (12), et étant pourvue d'un trou traversant central (13) coïncidant avec le trou du manchon (10) ; que ledit conduit (12) est formé avec un coude incurvé (14) dirigé vers le haut dans la zone de fixation de la bride d'assemblage (11), et est étendu avec une partie horizontale du conduit (15) dirigée vers le carneau (6), et traversant un trou traversant (16) de la zone inférieure du carneau (6), par assemblage de celle-ci avec son autre partie d'extrémité avec un coude incurvé (17) dirigé vers le bas, et logé dans un conduit vertical (18) assemblé à ladite chambre de combustion (19), qu'à l'intérieur du conduit tubulaire (12) est logé de façon stationnaire un conduit tubulaire supplémentaire (20), ayant un diamètre inférieur à celui du conduit précédent (12) et formé de la même façon et avec la même longueur que celui-ci, dans lequel l'une des parties d'extrémité dudit conduit supplémentaire (20) est assemblée de façon étanche au moyen d'un coude incurvé (21) dirigé vers le haut avec ladite bride d'assemblage (11) et ledit manchon 10, de telle manière que la cavité interne du conduit supplémentaire (20) coïncide avec le trou du manchon (10), entre lesdits conduits tubulaires (12) et (20) il est agencé un matériau isolant, tel que, par exemple, la laine minérale ; et finalement que ladite enveloppe externe métallique (8) est également fermée au niveau de sa partie d'extrémité opposée, depuis laquelle les fumées sortent, avec un disque de fermeture plat (22), de préférence de forme circulaire, qui est assemblé de façon étanche avec un manchon cylindrique vertical court (23) dirigé vers le haut, ledit manchon étant soudé au niveau de sa partie d'extrémité supérieure à une bride d'assemblage plate (24), qui est fixée de façon étanche avec la partie d'extrémité d'entrée d'un tube de sortie façonné (25), dont la partie d'extrémité est assemblée au niveau de la partie supérieure du carneau interne (6), et que, également dans ce cas, le disque de fermeture supérieur (22) et le manchon vertical (23) sont constitués du même matériau et formés de la même façon que les éléments correspondants de la partie d'extrémité inférieure de ladite enveloppe externe (8).

4. Dispositif selon la revendication 3, **caractérisé en ce que**, dans le conduit de circulation (12) sont disposés des trous traversants (41), pour l'insertion et la fixation de moyens de capteurs, qui sont étalonnés pour détecter les paramètres associés aux fumées circulantes, et en particulier le débit, la température et la composition de fumées entrant dans le carneau (6) par l'intermédiaire du conduit (18) et traversant ledit conduit de circulation (12), dans lequel, en tant que capteur de début de moyen de capteur de mesure de débit, il peut être utilisé au moins un instrument de mesure pour la pression différentielle, en tant que moyen de capteur pour la température et la composition de fumées, il peut être utilisé au moins un analyseur de fumée connu en tant que tel de type professionnel, conjointement avec les composants électriques et électroniques du magnétron (39) et les autres composants électriques se rapportant aux autres parties composantes du présent dispositif.

5. Dispositif selon les revendications 1 à 4, **caractérisé en ce qu'**au moins un élément de vanne (42), constitué d'un robinet-vanne, est en outre monté à l'intérieur du conduit de circulation (12), ledit élément de vanne est raccordé à une poignée de régulation (43) fixée de façon externe au conduit (12), et qui peut être actionnée, manuellement ou automatiquement, pour actionner l'élément de vanne (42) d'une position de fermeture vers une position semi-fermée ou ouverte du trajet pour faire circuler les fumées à travers ledit conduit (12), et inversement, dans le but de permettre complètement, partiellement ou d'empêcher la circulation de fumées à travers le même conduit ; que dans la chambre interne (44) du carneau (6) est également monté au moins un élément de vanne supplémentaire (45), à une position plus haute par rapport à celle de l'élément de vanne précédent (42), et en outre cet élément de vanne supplémentaire (45) est constitué d'un robinet-vanne et est également raccordé à une poignée de régulation (46) fixée à la paroi externe (47) du carneau (6), et qui peut être actionnée, comme la précédente, pour déplacer ledit élément de vanne (45) d'une position semi-ouverte ou ouverte vers une position de fermeture du trajet de circulation de fumées à travers ladite chambre interne (44), et, par conséquent, pour permettre complètement, partiellement ou empêcher la circulation de fumées à travers la même chambre interne, de telle manière que, en agissant sur l'un ou les deux robinets-vannes mentionnés ci-dessus, il est possible d'effectuer les opérations suivantes :
- actionnement dans la position ouverte de l'élément de vanne supplémentaire (45) et dans la position de fermeture de l'élément de vanne (42), condition dans laquelle les fumées traversent le vertical conduit (18) et sont forcées d'entrer directement dans la chambre interne (44) du carneau (6), de sorte que ces fumées traversent une telle chambre interne (44) dans la direction montante B, en sortant de l'ouverture supérieure ouverte (48) du carneau (6) et par dispersion de celles-ci dans l'environnement externe, et celles-ci ne peuvent pas traverser le conduit supplémentaire (20) qui est fermé par ledit élément de vanne (42) et, par conséquent, elles ne traversent pas le module de chauffage (5) et ne sont pas traitées pour la réduction, de façon à déterminer une pollution de l'environnement externe ;
- actionnement dans la position de fermeture de l'élément de vanne supplémentaire (45) et dans la position ouverte de l'élément de vanne (42), condition dans laquelle les fumées ne traversent pas la chambre interne (44) du carneau (6), étant donné que l'élément de vanne (45) est fermé, mais elles sont déviées à travers le conduit (20) et à travers le module de chauffage (5), étant donné que l'élément de vanne (42) est ouvert, et ensuite ces fumées circulent à travers les cavités des tubes verticaux (32) dans la direction montante A, dans lesquelles ces fumées sont purifiées en grande partie des substances polluantes, et elles sont finalement évacuées vers l'extérieur presque complètement purifiées des substances polluantes, en traversant la partie supérieure et l'ouverture supérieure ouverte (48) du carneau (6).

6. Dispositif selon la revendication 5, **caractérisé en ce que** ledit tube de sortie de tube (25) est en forme de coude (49) plié orthogonalement et assemblé au niveau d'une partie d'extrémité d'une partie horizontale de tube (50), dont l'autre partie d'extrémité est assemblée à la partie supérieure de la paroi externe (47) du carneau (6), à l'intérieur du tube de sortie (25) un conduit d'évacuation de fumée (51) est logé, formé au niveau de sa première partie d'extrémité avec un coude (52) correspondant au coude (49) du tube de sortie (25), qui est assemblé avec la cavité traversante interne dudit manchon vertical (23), et dont l'autre partie d'extrémité traverse un trou traversant correspondant (53) disposé à travers la paroi externe (47) du carneau (6), dans la partie supérieure de ce dernier, et une telle partie d'extrémité est assemblée à un coude court supplémentaire (54) dirigé vers le haut et logé dans la chambre interne (44) du même carneau, pour évacuer de cette manière à l'extérieur, à travers l'ouverture de sortie (48), les fumées purifiées en grande partie des substances polluantes, entre ledit conduit (51) et le tube (50), une isolation est agencée et est de préférence formée de laine minérale.

7. Dispositif selon la revendication 6, **caractérisée en ce que**, dans la partie horizontale de tube (50), à proximité de la sortie dudit module de chauffage (5), il est disposé au moins deux trous traversants (55, 56), à travers lesquels des moyens de détection associés sont introduits, pour détecter le débit, la température et la composition de fumées sortant du module de chauffage (5) vers le carneau (6), lesdits moyens de détection étant électriquement connectés à ladite station centrale de commande du présent dispositif ; finalement, dans le carneau (6), il est disposé un trou traversant inférieur (57) et au moins deux trous traversants supérieurs (58, 59), pour le passage de moyens de détection correspondants, parmi lesquels les moyens inférieurs sont adaptés pour détecter le débit des fumées entrant dans la chambre interne (44) du carneau (6), tandis que les moyens supérieurs sont adaptés pour détecter le débit, la température et la composition de fumées traversant ladite chambre interne (44), lorsque le robinet-vanne (45) du carneau (6) est ouvert, lesdits moyens de détection étant en outre électriquement connectés à ladite station centrale de commande.

8. Dispositif selon la revendication 6, **caractérisé en ce que** ledit module (5) est logé et fixé de manière appropriée à l'intérieur du carneau (6) qui, dans ce cas, est de forme plus grande et plus longue que la précédente, et à cet effet, il est formé avec une paroi inférieure circulaire fermée et inclinée, ayant des inclinaisons (60, 61) qui sont mutuellement symétriques, dont la partie inférieure est assemblée au conduit (18) de la chambre de combustion (19), et dont la partie supérieure est assemblée à la paroi externe cylindrique (62) du carneau (6), qui est agrandie et allongée de façon à pouvoir loger ledit module de chauffage (5) de fumées, la partie supérieure du carneau (6) étant en outre formée avec une paroi supérieure circulaire inclinée, ayant des inclinaisons (63, 64) mutuellement symétriques et opposées à celles de la paroi inférieure, et dans la paroi supérieure, il est en outre disposé l'ouverture supérieure (48) du carneau (6), depuis laquelle les fumées purifiées en grande partie des substances polluantes sortent, qui circulent vers le haut dans la direction A et sont transportées à l'intérieur du module de chauffage (5) à travers une paroi circulaire ouverte inclinée, ayant des inclinaisons (65, 66) mutuellement symétriques, ladite paroi étant assemblée à l'entrée du module de chauffage (5) par l'intermédiaire d'une partie de conduit (67) ayant une forme cylindrique ; en outre, dans ce cas, il est disposé au moins un magnétron, qui est de préférence fixé de façon externe à la paroi externe (62) du carneau (6), et est encore en communication par l'intermédiaire de guides d'ondes avec les tubes allongés agencés à l'intérieur de l'enveloppe externe du module de chauffage (5), et la sortie du module de chauffage (5) étant assemblée à un conduit cylindrique court (68) et une paroi supérieure circulaire inclinée, ayant des inclinaisons (69, 70) mutuellement symétriques, qui communique avec l'ouverture de sortie (48) pour évacuer les fumées à l'extérieur, ledit module de chauffage (5) ayant un tirage naturel, par conséquent, dans ce cas, il est obtenu un système autorégulé, dans des conditions telles que si le module (5) ne fonctionne pas, les fumées passent sans être traitées à la fois à l'intérieur et à l'extérieur du même module et, si le module (5) est activé, il aura un tirage naturel qui laisse passer uniquement les fumées qui peuvent être traitées, sans qu'il soit vérifié un arrêt du carneau.

9. Dispositif selon la revendication 8, **caractérisé en ce que**, en outre, un module de refroidissement (73) pour les fumées, formé au moins par un échangeur de chaleur, adapté pour refroidir les fumées après leur épuration à des températures permettant d'empêcher la recombinaison des substances réduites à la sortie dudit échangeur de chaleur, ledit échangeur de chaleur (73) étant raccordé à son entrée et à sa sortie à la sortie du module de chauffage (5) et au carneau (6), dans la partie supérieure dudit carneau, respectivement, que l'échangeur de chaleur (73) est sensiblement constitué d'un corps central (74) qui est étendu dans la direction horizontale, qui est formé de préférence avec une forme cylindrique et est équipé d'un ensemble de tubes traversants horizontaux (75) séparés les uns des autres et formés à travers le corps central (74) et dans la longueur de celui-ci, disposés pour le passage des fumées devant être refroidies, lesdits tubes s'étendant eux-mêmes de la partie d'extrémité de l'entrée à la partie d'extrémité de la sortie de l'échangeur de chaleur (73), ledit corps central (74) étant complètement recouvert par une enveloppe externe (76), définissant par conséquent une chambre interne pour permettre la circulation de l'air pour refroidir la chaleur produite par les fumées traversant les tubes traversants (75), ledit air étant aspiré dans la direction C à travers un remplisseur d'entrée ouvert et vertical court (77), fixé à la partie supérieure de l'enveloppe externe (76) et dirigé vers le haut, et, après avoir traversé la chambre interne et refroidi le corps central (74), l'air chauffé est évacué à l'extérieur par l'intermédiaire d'un remplisseur de sortie ouvert et vertical (78), fixé à la partie inférieure de l'enveloppe externe (76), l'entrée dudit échangeur de chaleur (73) étant formée par ledit tube d'entrée (25), qui est également en forme de coude (49) assemblé sur un côté à une partie horizontale de tube (79), la partie d'extrémité de celui-ci est assemblée de façon étanche à la paroi latérale (80) de l'enveloppe externe (76), un tel coude (49) étant également formé comme précédemment pour être assemblé à la partie de sortie supérieure du module de chauffage (5) de la façon décrite ci-dessus, et la sortie de l'échangeur de chaleur (73) étant formée par une partie horizontale de tube (81), une partie d'extrémité de celui-ci est assemblée de façon étanche à l'autre paroi latérale (82) de l'enveloppe externe (76) et l'autre partie d'extrémité de celui-ci pénètre dans la chambre interne du carneau (6), de façon à évacuer les fumées refroidies vers l'extérieur.

10. Dispositif selon la revendication 9, **caractérisé en ce que**, dans la partie horizontale de tube (79), à l'entrée de l'échangeur de chaleur (73), deux trous traversants (55, 56) sont également disposés pour insérer des moyens de détection associés pour détecter la température, le débit et la composition des fumées, lesdits moyens de détection étant électriquement connectés à ladite station centrale de commande ; dans la partie horizontale de tube (81), au moins deux trous traversants (83, 84) sont disposés vers la sortie de l'échangeur de chaleur (73), pour le passage de moyens de détection correspondants pour détecter le débit, la température et la composition des fumées sortant du module de refroidissement (73) vers la sortie (48) du carneau (6), lesdits moyens de détection étant en outre électriquement connectés à ladite station centrale de commande, en outre, lesdits trois trous traversants (57, 58, 59) étant disposés dans le carneau (6).

11. Dispositif selon la revendication 10, **caractérisé en ce que** lesdits modules de chauffage (5) et de refroidissement (73) des fumées sont à nouveau assemblés l'un à l'autre et agencés de façon légèrement espacée l'un de l'autre dans la direction verticale et sont logés dans et fixés de manière appropriée à l'espace interne du carneau (6), qui, dans ce cas également, est de forme plus grande et plus longue que le précédent, et est également formé avec une paroi circulaire inférieure fermée et inclinée, dont la partie inférieure est assemblée au conduit (18) de la chambre de combustion (19) et dont la partie supérieure est assemblée à la partie circulaire externe (62) du carneau (6), qui est agrandie et allongée de façon à pouvoir loger lesdits modules de chauffage (5) et de refroidissement (73) des fumées, la partie supérieure du carneau (6) étant en outre formée avec une paroi supérieure circulaire inclinée et, dans la paroi supérieure, l'ouverture supérieure (48) du carneau (6) étant également disposée, depuis laquelle les fumées purifiées en grande partie des substances polluantes sortent, et également dans ce cas, les fumées produites par la combustion des produits dans la chambre de combustion (19) circulant vers le haut dans la direction A, en traversant le conduit (18) et étant transportées à l'intérieur du module de chauffage (5) par tirage naturel, également dans ce cas, le module de refroidissement (73) étant raccordé avec son remplisseur d'entrée (77) à l'extérieur, en laissant traverser un tel remplisseur à travers un trou correspondant de la paroi externe (62), et en raccordant son remplisseur de sortie (78) au conduit (85), en traversant un trou traversant correspondant de la paroi externe (62), et assemblé avec une pompe (86), elle-même assemblée à la chambre de combustion (19) par l'intermédiaire d'un conduit court (87), tout cela afin de transporter l'air chaud qui provient de l'échangeur de chaleur (73) dans la direction de circulation C dans la même chambre de combustion, pour augmenter l'air comburant dans cette chambre et de façon à améliorer la combustion des produits.

12. Procédé de réduction de substances polluantes liquides, gazeuses et/ou solides de différents types, contenues dans les fumées d'échappement, comprenant la fourniture du dispositif selon les revendications 1 à 11 comprenant un module de chauffage (5), au moins un magnétron (39), un carneau (6), une chambre de combustion (19), **caractérisé en ce que** le procédé comprend les phases suivantes :
- production de micro-ondes au moyen d'un magnétron (39), appliquées audit module de chauffage (5), lorsque les fumées chaudes contenant des substances polluantes produites par la combustion sont en circulation dans les cavités internes d'un ou plusieurs desdits tubes allongés (32) constitués de matériau accepteur qui sont fixés de façon interne au module de chauffage, et sont dirigés vers la partie d'extrémité de sortie du même module ;
- transmission des micro-ondes produites par le magnétron (39) à travers les trous traversants (38) du récipient allongé (27), contenant lesdits tubes allongés (32) fermés par ledit matériau isolant (34), lesdites micro-ondes passant séquentiellement dans un premier temps à travers ledit matériau isolant (34), puis à travers toutes les parois périphériques (33) et les cavités internes (92) des tubes allongés (32), dont le matériau accepteur produit des rayonnements infrarouges qui irradient dans la cavité interne du même tube, par détermination d'un chauffage supplémentaire des fumées chaudes circulantes, et une réflexion multiple simultanée des micro-ondes dans les cavités internes délimitées entre les parois périphériques (33) de chaque tube (32) ;
- production, causée par les réflexions multiples des micro-ondes entre la paroi périphérique de chaque tube (32), et le contact des micro-ondes avec des températures élevées, avec les non-homogénéités et les différentes densités du gaz contenu dans les fumées circulantes, il est généré des pics d'énergie des micro-ondes appelés points chauds qui sont, de manière inattendue, distribués de façon aléatoire et à des positions variables et différentes dans les cavités internes de tous les tubes, de telle manière que, en dimensionnant de manière appropriée à la fois les caractéristiques des micro-ondes, qui traversent la chambre interne (26), et la taille et la qualité du matériau accepteur des tubes allongés (32), les points chauds générés ainsi et répartis de façon aléatoire peuvent atteindre des températures très élevées, également de l'ordre d'une plage comprise entre environ 1200 °C et environ 2600 °C, pour chauffer les fumées à ces températures très élevées, de façon à dissocier les molécules de différents composés constituant les substances polluantes des fumées, de façon à évacuer dans l'atmosphère les fumées avec un pourcentage élevé de substances à composant unique non polluantes.
